# EUROPEAN PATENT SPECIFICATION

(11) **EP 4 109 256 B1**
(45) Date of publication and mention of the grant of the patent: **08.01.2025**
(21) Application number: 22161033.0
(22) Date of filing: 09.03.2022
(51) Int. Cl.: G06F 9/50, G06V 10/94, H04L 9/32, H04L 9/00

(54) **MODEL PROPAGATION IN EDGE ARCHITECTURES**
MODELLAUSBREITUNG IN EDGE-ARCHITEKTUREN
PROPAGATION DE MODÈLE DANS DES ARCHITECTURES DE TYPE EDGE

(30) Priority: 25.06.2021 US 202117359162
(43) Date of publication of application: 28.12.2022
(73) Proprietor: INTEL Corporation, Santa Clara, CA 95054 (US)
(72) Inventor: VERRALL, Timothy, Pleasant Hill, 94523 (US); WILLHALM, Thomas, 69207 Sandhausen (DE); GUIM BERNAT, Francesc, 08036 Barcelona (ES); KUMAR, Karthik, Chandler, 85249 (US)
(74) Representative: Maiwald GmbH

(56) References cited:
- CN-A- 112 685 792
- US-A1- 2019 370 687
- US-A1- 2021 110 310

## Description

### FIELD OF THE DISCLOSURE

This disclosure relates generally to communications between computing devices, and, more particularly, to model propagation in edge architectures.

### BACKGROUND

Different computing devices in the same or similar locations and/or under the same or similar conditions may perform the same computing routines, resulting in redundant operations.

US 2021/110310 A1 describes an apparatus to verify trained models in an edge environment.

### SUMMARY

The present invention is defined by the subject-matter of the independent claims. Additional features of the invention are presented in the dependent claims.

### BRIEF DESCRIPTION OF THE DRAWINGS

FIG. 1 illustrates an overview of an Edge cloud configuration for Edge computing.
FIG. 2 illustrates operational layers among endpoints, an Edge cloud, and cloud computing environments.
FIG. 3 illustrates an example approach for networking and services in an Edge computing system.
FIG. 4 illustrates deployment of a virtual Edge configuration in an Edge computing system operated among multiple Edge nodes and multiple tenants.
FIG. 5 illustrates various compute arrangements deploying containers in an Edge computing system.
FIG. 6 illustrates a compute and communication use case involving mobile access to applications in an Edge computing system.
FIG. 7 illustrates an example mobile Edge system reference architecture, arranged according to an ETSI Multi-Access Edge Computing (MEC) specification.
FIG. 8A provides an overview of example components for compute deployed at a compute node in an Edge computing system.
FIG. 8B provides a further overview of example components within a computing device in an Edge computing system.
FIG. 9 illustrates network connectivity in non-terrestrial (satellite) and terrestrial (mobile cellular network) settings, according to an example.
FIG. 10 is a block diagram of an example device or system to propagate a model in edge architecture in accordance with the teachings of this disclosure.
FIG. 11 is a flowchart representative of example machine readable instructions that may be executed by example processor circuitry to implement an example model propagator of FIG. 10.
FIG. 12 is a flowchart representative of example machine readable instructions that may be executed by example processor circuitry to implement an example model propagator of FIG. 10.
FIG. 13 is a block diagram of an example processing platform including processor circuitry structured to execute the example machine readable instructions of FIGS. 11 and 12 to implement the example model propagator of FIG. 10.
FIG. 14 is a block diagram of an example implementation of the processor circuitry of FIG. 13.
FIG. 15 is a block diagram of another example implementation of the processor circuitry of FIG. 13.

The figures are not to scale. Also, in general, the same reference numbers will be used throughout the drawing(s) and accompanying written description to refer to the same or like parts.

### DETAILED DESCRIPTION

In edge computing, compute and other processing are performed at different locations such as, for example, base station towers, central offices, etc. with the objective of enabling low latency responses for different computing tasks. In some examples, the different computing tasks include modeling. Models are constructs that aide understanding of real world systems. Models include data input, data processing, and an output of expected results. As used herein, a model is a set of instructions and/or data that may be ingested, processed, interpreted and/or otherwise manipulated by processor circuitry to produce a result. Often, a model is operated using input data to produce output data in accordance with one or more relationships reflected in the model. The model may be based on training data. In one example, thousands of base stations along a highway may model accident probability by computing information based on ambient weather conditions such as rain or snow, road conditions, traffic, etc. The results of these computing tasks may facilitate decisions at the edge such as, for example, increasing the interval time between green lights to allow cars to ramp onto a highway, and/or other precautionary measures from a traffic control perspective. In another example, thousands of cars along the highway may be building their own models for autonomous driving based on updated traffic information, ambient conditions, etc.

In some examples, multiple base stations would be computing very similar data. For example, base stations along the same highway may compute very similar data to, for example, train artificial intelligence (Al) models to predict the probability of an accident. Likewise, thousands of cars may be collecting and operating on similar information, especially in cases where the cars are in geographical proximity.

A lot of redundant operation could be prevented when edge appliances can share their models. For example, redundant operations can be reduced or eliminated when the vehicles and/or base stations share their models with one or more other vehicles and/or base stations. Respective ones of the vehicles receiving such a model could validate the model with historical, current, and/or just-collected data, and transmit the model to another vehicle. For example, if a number of vehicles on the same highway have each confirmed that a model to apply brake pressure to prevent skidding in an ambient weather condition of snowfall is XYZ, a new vehicle that receive the model XYZ can validate and use the model more readily.

In the examples disclosed herein, models are transmitted within the edge infrastructure while preserving the flow of information and reconciling the models against changes in geo-location or ambient temperature/weather conditions. The examples disclosed herein also enable trust and preclude the possibility that the chain of validation and/or usage of the model has not been tampered with. For example, an edge location may create a model to perform a use case 1. For example, a base station may create a model of the probability of accident due to slippery roads. A set of peer devices can validate the model with their own data (i.e., historical data) and certify the model via a blockchain. For example, a plurality of vehicles can execute the accident model using data gathered by sensors in the respective vehicles. After the attestation is complete, other edge appliances (e.g., other vehicles) receiving the model can validate the blockchain signature and use the model based on trust of the architecture. The other edge appliances may or may not have historical data to validate the model but can still use the model.

A blockchain is a type of database/data structure that electronically stores information for a computing device or computing system that enables identifying and tracking transactions digitally and sharing this information across a distributed network of computers. Blockchains store data in groups, or blocks. The respective blocks have specific storage capacities. Once a block is filled, another block is added. The blocks contain information about the block previous to it, which links the blocks. In some examples, blockchains are decentralized where different entities have control of different blocks. In some examples, blockchains are immutable where the data entered is irreversible.

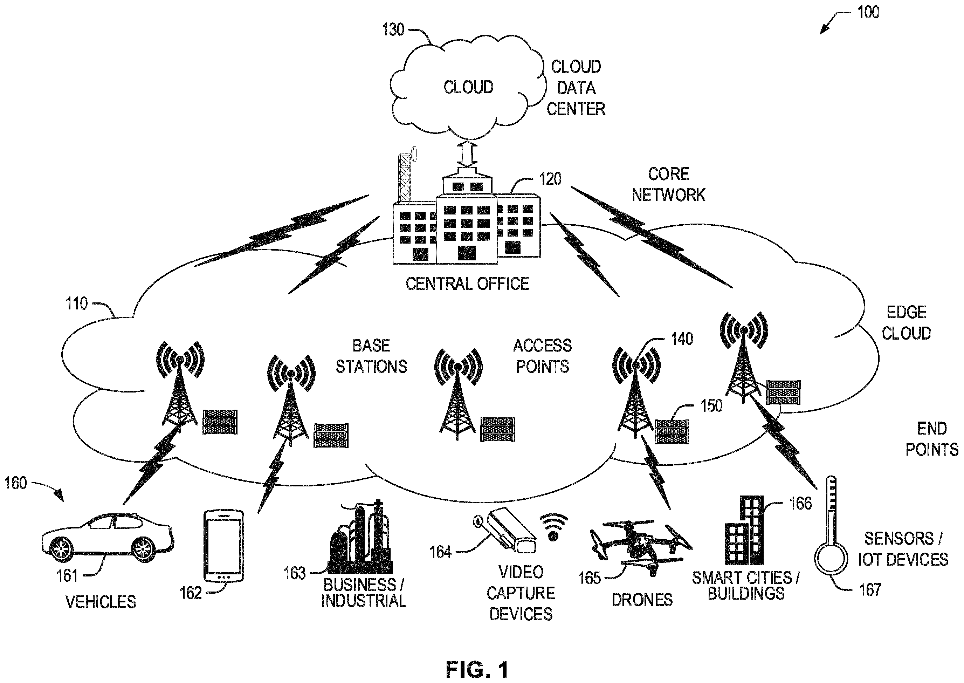

FIG. 1 is a block diagram 100 showing an overview of a configuration for Edge computing, which includes a layer of processing referred to in many of the following examples as an "Edge cloud". As shown, the Edge cloud 110 is co-located at an Edge location, such as an access point or base station 140, a local processing hub 150, or a central office 120, and thus may include multiple entities, devices, and equipment instances. The Edge cloud 110 is located much closer to the endpoint (consumer and producer) data sources 160 (e.g., autonomous vehicles 161, user equipment 162, business and industrial equipment 163, video capture devices 164, drones 165, smart cities and building devices 166, sensors and loT devices 167, etc.) than the cloud data center 130. Compute, memory, and storage resources which are offered at the edges in the Edge cloud 110 are critical to providing ultra-low latency response times for services and functions used by the endpoint data sources 160 as well as reduce network backhaul traffic from the Edge cloud 110 toward cloud data center 130 thus improving energy consumption and overall network usages among other benefits.

Compute, memory, and storage are scarce resources, and generally decrease depending on the Edge location (e.g., fewer processing resources being available at consumer endpoint devices, than at a base station, than at a central office). However, the closer that the Edge location is to the endpoint (e.g., user equipment (UE)), the more that space and power is often constrained. Thus, Edge computing attempts to reduce the amount of resources needed for network services, through the distribution of more resources that are located closer both geographically and in network access time. In this manner, Edge computing attempts to bring the compute resources to the workload data where appropriate or bring the workload data to the compute resources.

The following describes aspects of an Edge cloud architecture that covers multiple potential deployments and addresses restrictions that some network operators or service providers may have in their own infrastructures. These include variation of configurations based on the Edge location (because edges at a base station level, for instance, may have more constrained performance and capabilities in a multi-tenant scenario); configurations based on the type of compute, memory, storage, fabric, acceleration, or like resources available to Edge locations, tiers of locations, or groups of locations; the service, security, and management and orchestration capabilities; and related objectives to achieve usability and performance of end services. These deployments may accomplish processing in network layers that may be considered as "near Edge", "close Edge", "local Edge", "middle Edge", or "far Edge" layers, depending on latency, distance, and timing characteristics.

Edge computing is a developing paradigm where computing is performed at or closer to the "Edge" of a network, typically through the use of a compute platform (e.g., x86 or ARM compute hardware architecture) implemented at base stations, gateways, network routers, or other devices which are much closer to endpoint devices producing and consuming the data. For example, Edge gateway servers may be equipped with pools of memory and storage resources to perform computation in real-time for low latency use-cases (e.g., autonomous driving or video surveillance) for connected client devices. Or as an example, base stations may be augmented with compute and acceleration resources to directly process service workloads for connected user equipment, without further communicating data via backhaul networks. Or as another example, central office network management hardware may be replaced with standardized compute hardware that performs virtualized network functions and offers compute resources for the execution of services and consumer functions for connected devices. Within Edge computing networks, there may be scenarios in services which the compute resource will be "moved" to the data, as well as scenarios in which the data will be "moved" to the compute resource. Or as an example, base station compute, acceleration and network resources can provide services in order to scale to workload demands on an as needed basis by activating dormant capacity (subscription, capacity on demand) in order to manage corner cases, emergencies or to provide longevity for deployed resources over a significantly longer implemented lifecycle.

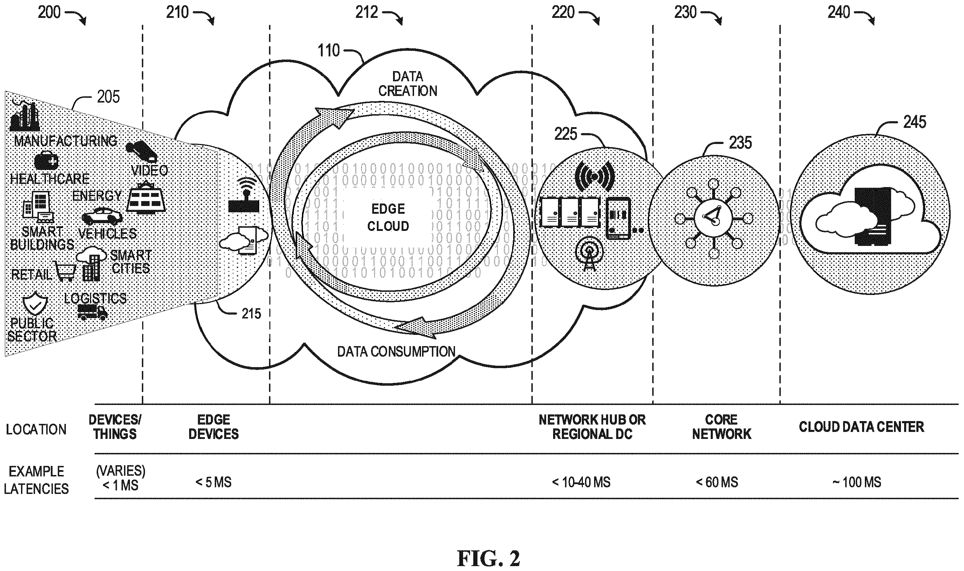

FIG. 2 illustrates operational layers among endpoints, an Edge cloud, and cloud computing environments. Specifically, FIG. 2 depicts examples of computational use cases 205, utilizing the Edge cloud 110 among multiple illustrative layers of network computing. The layers begin at an endpoint (devices and things) layer 200, which accesses the Edge cloud 110 to conduct data creation, analysis, and data consumption activities. The Edge cloud 110 may span multiple network layers, such as an Edge devices layer 210 having gateways, on-premise servers, or network equipment (nodes 215) located in physically proximate Edge systems; a network access layer 220, encompassing base stations, radio processing units, network hubs, regional data centers (DC), or local network equipment (equipment 225); and any equipment, devices, or nodes located therebetween (in layer 212, not illustrated in detail). The network communications within the Edge cloud 110 and among the various layers may occur via any number of wired or wireless mediums, including via connectivity architectures and technologies not depicted.

Examples of latency, resulting from network communication distance and processing time constraints, may range from less than a millisecond (ms) when among the endpoint layer 200, under 5 ms at the Edge devices layer 210, to even between 10 to 40 ms when communicating with nodes at the network access layer 220. Beyond the Edge cloud 110 are core network 230 and cloud data center 240 layers, each with increasing latency (e.g., between 50-60 ms at the core network layer 230, to 100 or more ms at the cloud data center layer). As a result, operations at a core network data center 235 or a cloud data center 245, with latencies of at least 50 to 100 ms or more, will not be able to accomplish many time-critical functions of the use cases 205. Each of these latency values are provided for purposes of illustration and contrast; it will be understood that the use of other access network mediums and technologies may further reduce the latencies. In some examples, respective portions of the network may be categorized as "close Edge", "local Edge", "near Edge", "middle Edge", or "far Edge" layers, relative to a network source and destination. For instance, from the perspective of the core network data center 235 or a cloud data center 245, a central office or content data network may be considered as being located within a "near Edge" layer ("near" to the cloud, having high latency values when communicating with the devices and endpoints of the use cases 205), whereas an access point, base station, on-premise server, or network gateway may be considered as located within a "far Edge" layer ("far" from the cloud, having low latency values when communicating with the devices and endpoints of the use cases 205). It will be understood that other categorizations of a particular network layer as constituting a "close", "local", "near", "middle", or "far" Edge may be based on latency, distance, number of network hops, or other measurable characteristics, as measured from a source in any of the network layers 200-240.

The various use cases 205 may access resources under usage pressure from incoming streams, due to multiple services utilizing the Edge cloud. To achieve results with low latency, the services executed within the Edge cloud 110 balance varying requirements in terms of: (a) Priority (throughput or latency) and Quality of Service (QoS) (e.g., traffic for an autonomous car may have higher priority than a temperature sensor in terms of response time requirement; or, a performance sensitivity/bottleneck may exist at a compute/accelerator, memory, storage, or network resource, depending on the application); (b) Reliability and Resiliency (e.g., some input streams need to be acted upon and the traffic routed with mission-critical reliability, where as some other input streams may be tolerate an occasional failure, depending on the application); and (c) Physical constraints (e.g., power, cooling and form-factor).

The end-to-end service view for these use cases involves the concept of a service-flow and is associated with a transaction. The transaction details the overall service requirement for the entity consuming the service, as well as the associated services for the resources, workloads, workflows, and business functional and business level requirements. The services executed with the "terms" described may be managed at each layer in a way to assure real time, and runtime contractual compliance for the transaction during the lifecycle of the service. When a component in the transaction is missing its agreed to SLA, the system as a whole (components in the transaction) may provide the ability to (1) understand the impact of the SLA violation, and (2) augment other components in the system to resume overall transaction SLA, and (3) implement steps to remediate.

Thus, with these variations and service features in mind, Edge computing within the Edge cloud 110 may provide the ability to serve and respond to multiple applications of the use cases 205 (e.g., object tracking, video surveillance, connected cars, etc.) in real-time or near real-time, and meet ultra-low latency requirements for these multiple applications. These advantages enable a whole new class of applications (Virtual Network Functions (VNFs), Function as a Service (FaaS), Edge as a Service (EaaS), standard processes, etc.), which cannot leverage conventional cloud computing due to latency or other limitations.

However, with the advantages of Edge computing comes the following caveats. The devices located at the Edge are often resource constrained and therefore there is pressure on usage of Edge resources. Typically, this is addressed through the pooling of memory and storage resources for use by multiple users (tenants) and devices. The Edge may be power and cooling constrained and therefore the power usage needs to be accounted for by the applications that are consuming the most power. There may be inherent power-performance tradeoffs in these pooled memory resources, as many of them are likely to use emerging memory technologies, where more power requires greater memory bandwidth. Likewise, improved security of hardware and root of trust trusted functions are also required because Edge locations may be unmanned and may even need permissioned access (e.g., when housed in a third-party location). Such issues are magnified in the Edge cloud 110 in a multi-tenant, multi-owner, or multi-access setting, where services and applications are requested by many users, especially as network usage dynamically fluctuates and the composition of the multiple stakeholders, use cases, and services changes.

At a more generic level, an Edge computing system may be described to encompass any number of deployments at the previously discussed layers operating in the Edge cloud 110 (network layers 200-240), which provide coordination from client and distributed computing devices. One or more Edge gateway nodes, one or more Edge aggregation nodes, and one or more core data centers may be distributed across layers of the network to provide an implementation of the Edge computing system by or on behalf of a telecommunication service provider ("telco", or "TSP"), internet-of-things service provider, cloud service provider (CSP), enterprise entity, or any other number of entities. Various implementations and configurations of the Edge computing system may be provided dynamically, such as when orchestrated to meet service objectives.

Consistent with the examples provided herein, a client compute node may be embodied as any type of endpoint component, device, appliance, or other thing capable of communicating as a producer or consumer of data. Further, the label "node" or "device" as used in the Edge computing system does not necessarily mean that such node or device operates in a client or agent/minion/follower role; rather, any of the nodes or devices in the Edge computing system refer to individual entities, nodes, or subsystems which include discrete or connected hardware or software configurations to facilitate or use the Edge cloud 110.

As such, the Edge cloud 110 is formed from network components and functional features operated by and within Edge gateway nodes, Edge aggregation nodes, or other Edge compute nodes among network layers 210-230. The Edge cloud 110 thus may be embodied as any type of network that provides Edge computing and/or storage resources which are proximately located to radio access network (RAN) capable endpoint devices (e.g., mobile computing devices, loT devices, smart devices, etc.), which are discussed herein. In other words, the Edge cloud 110 may be envisioned as an "Edge" which connects the endpoint devices and traditional network access points that serve as an ingress point into service provider core networks, including mobile carrier networks (e.g., Global System for Mobile Communications (GSM) networks, Long-Term Evolution (LTE) networks, 5G/6G networks, etc.), while also providing storage and/or compute capabilities. Other types and forms of network access (e.g., Wi-Fi, long-range wireless, wired networks including optical networks) may also be utilized in place of or in combination with such 3GPP carrier networks.

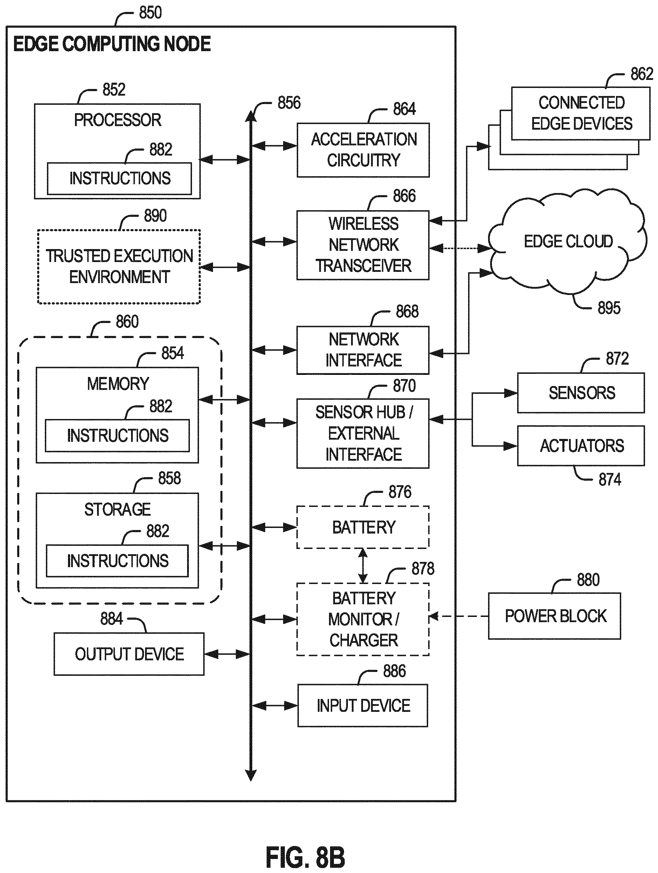

The network components of the Edge cloud 110 may be servers, multi-tenant servers, appliance computing devices, and/or any other type of computing devices. For example, the Edge cloud 110 may include an appliance computing device that is a self-contained electronic device including a housing, a chassis, a case or a shell. In some circumstances, the housing may be dimensioned for portability such that it can be carried by a human and/or shipped. Example housings may include materials that form one or more exterior surfaces that partially or fully protect contents of the appliance, in which protection may include weather protection, hazardous environment protection (e.g., EMI, vibration, extreme temperatures), and/or enable submergibility. Example housings may include power circuitry to provide power for stationary and/or portable implementations, such as AC power inputs, DC power inputs, AC/DC or DC/AC converter(s), power regulators, transformers, charging circuitry, batteries, wired inputs and/or wireless power inputs. Example housings and/or surfaces thereof may include or connect to mounting hardware to enable attachment to structures such as buildings, telecommunication structures (e.g., poles, antenna structures, etc.) and/or racks (e.g., server racks, blade mounts, etc.). Example housings and/or surfaces thereof may support one or more sensors (e.g., temperature sensors, vibration sensors, light sensors, acoustic sensors, capacitive sensors, proximity sensors, etc.). One or more such sensors may be contained in, carried by, or otherwise embedded in the surface and/or mounted to the surface of the appliance. Example housings and/or surfaces thereof may support mechanical connectivity, such as propulsion hardware (e.g., wheels, propellers, etc.) and/or articulating hardware (e.g., robot arms, pivotable appendages, etc.). In some circumstances, the sensors may include any type of input devices such as user interface hardware (e.g., buttons, switches, dials, sliders, etc.). In some circumstances, example housings include output devices contained in, carried by, embedded therein and/or attached thereto. Output devices may include displays, touchscreens, lights, LEDs, speakers, I/O ports (e.g., USB), etc. In some circumstances, Edge devices are devices presented in the network for a specific purpose (e.g., a traffic light), but may have processing and/or other capacities that may be utilized for other purposes. Such Edge devices may be independent from other networked devices and may be provided with a housing having a form factor suitable for its primary purpose; yet be available for other compute tasks that do not interfere with its primary task. Edge devices include Internet of Things devices. The appliance computing device may include hardware and software components to manage local issues such as device temperature, vibration, resource utilization, updates, power issues, physical and network security, etc. Example hardware for implementing an appliance computing device is described in conjunction with FIG. 8B. The Edge cloud 110 may also include one or more servers and/or one or more multi-tenant servers. Such a server may include an operating system and implement a virtual computing environment. A virtual computing environment may include a hypervisor managing (e.g., spawning, deploying, destroying, etc.) one or more virtual machines, one or more containers, etc. Such virtual computing environments provide an execution environment in which one or more applications and/or other software, code or scripts may execute while being isolated from one or more other applications, software, code or scripts.

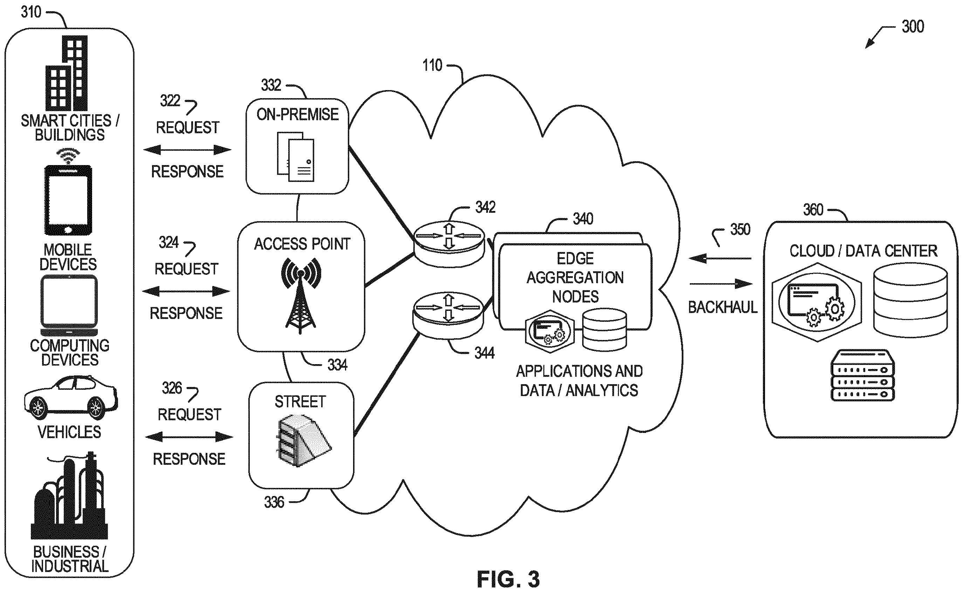

In FIG. 3, various client endpoints 310 (in the form of mobile devices, computers, autonomous vehicles, business computing equipment, industrial processing equipment) exchange requests and responses that are specific to the type of endpoint network aggregation. For instance, client endpoints 310 may obtain network access via a wired broadband network, by exchanging requests and responses 322 through an on-premise network system 332. Some client endpoints 310, such as mobile computing devices, may obtain network access via a wireless broadband network, by exchanging requests and responses 324 through an access point (e.g., cellular network tower) 334. Some client endpoints 310, such as autonomous vehicles may obtain network access for requests and responses 326 via a wireless vehicular network through a street-located network system 336. However, regardless of the type of network access, the TSP may deploy aggregation points 342, 344 within the Edge cloud 110 to aggregate traffic and requests. Thus, within the Edge cloud A110, the TSP may deploy various compute and storage resources, such as at Edge aggregation nodes 340, to provide requested content. The Edge aggregation nodes 340 and other systems of the Edge cloud 110 are connected to a cloud or data center 360, which uses a backhaul network 350 to fulfill higher-latency requests from a cloud/data center for websites, applications, database servers, etc. Additional or consolidated instances of the Edge aggregation nodes 340 and the aggregation points 342, 344, including those deployed on a single server framework, may also be present within the Edge cloud 110 or other areas of the TSP infrastructure.

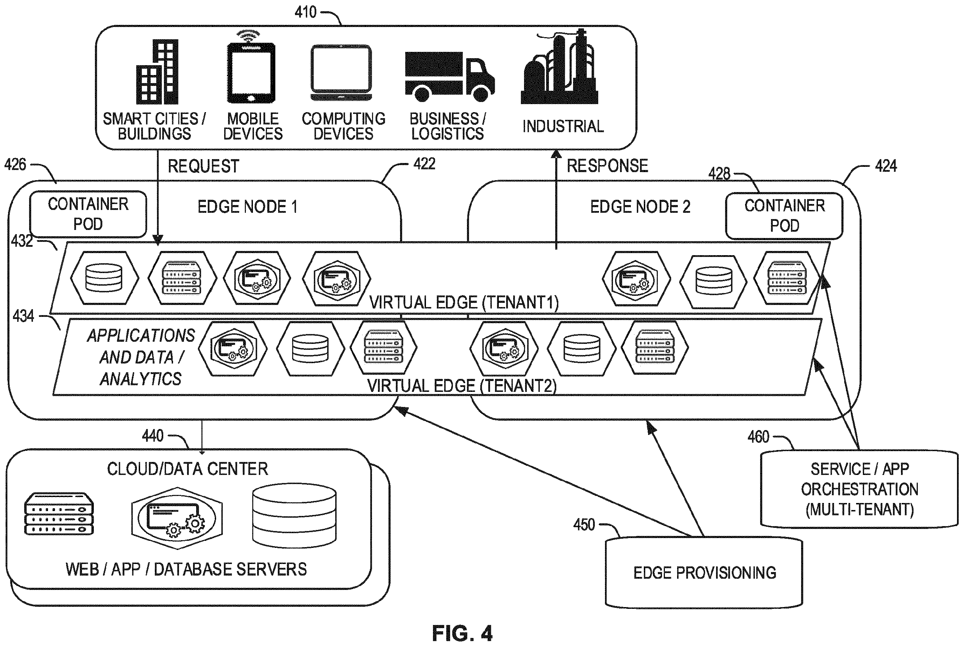

FIG. 4 illustrates deployment and orchestration for virtualized and container-based Edge configurations across an Edge computing system operated among multiple Edge nodes and multiple tenants (e.g., users, providers) which use such Edge nodes. Specifically, FIG. 4 depicts coordination of a first Edge node 422 and a second Edge node 424 in an Edge computing system 400, to fulfill requests and responses for various client endpoints 410 (e.g., smart cities / building systems, mobile devices, computing devices, business/logistics systems, industrial systems, etc.), which access various virtual Edge instances. Here, the virtual Edge instances 432, 434 provide Edge compute capabilities and processing in an Edge cloud, with access to a cloud/data center 440 for higher-latency requests for websites, applications, database servers, etc. However, the Edge cloud enables coordination of processing among multiple Edge nodes for multiple tenants or entities.

In the example of FIG. 4, these virtual Edge instances include: a first virtual Edge 432, offered to a first tenant (Tenant 1), which offers a first combination of Edge storage, computing, and services; and a second virtual Edge 434, offering a second combination of Edge storage, computing, and services. The virtual Edge instances 432, 434 are distributed among the Edge nodes 422, 424, and may include scenarios in which a request and response are fulfilled from the same or different Edge nodes. The configuration of the Edge nodes 422, 424 to operate in a distributed yet coordinated fashion occurs based on Edge provisioning functions 450. The functionality of the Edge nodes 422, 424 to provide coordinated operation for applications and services, among multiple tenants, occurs based on orchestration functions 460.

It should be understood that some of the devices in 410 are multi-tenant devices where Tenant 1 may function within a tenant1 'slice' while a Tenant 2 may function within a tenant2 slice (and, in further examples, additional or sub-tenants may exist; and each tenant may even be specifically entitled and transactionally tied to a specific set of features all the way day to specific hardware features). A trusted multi-tenant device may further contain a tenant specific cryptographic key such that the combination of key and slice may be considered a "root of trust" (RoT) or tenant specific RoT. A RoT may further be computed dynamically composed using a DICE (Device Identity Composition Engine) architecture such that a single DICE hardware building block may be used to construct layered trusted computing base contexts for layering of device capabilities (such as a Field Programmable Gate Array (FPGA)). The RoT may further be used for a trusted computing context to enable a "fan-out" that is useful for supporting multi-tenancy. Within a multi-tenant environment, the respective Edge nodes 422, 424 may operate as security feature enforcement points for local resources allocated to multiple tenants per node. Additionally, tenant runtime and application execution (e.g., in instances 432, 434) may serve as an enforcement point for a security feature that creates a virtual Edge abstraction of resources spanning potentially multiple physical hosting platforms. Finally, the orchestration functions 460 at an orchestration entity may operate as a security feature enforcement point for marshalling resources along tenant boundaries.

Edge computing nodes may partition resources (memory, central processing unit (CPU), graphics processing unit (GPU), interrupt controller, input/output (I/O) controller, memory controller, bus controller, etc.) where respective partitionings may contain a RoT capability and where fan-out and layering according to a DICE model may further be applied to Edge Nodes. Cloud computing nodes often use containers, FaaS engines, Servlets, servers, or other computation abstraction that may be partitioned according to a DICE layering and fan-out structure to support a RoT context for each. Accordingly, the respective RoTs spanning devices 410, 422, and 440 may coordinate the establishment of a distributed trusted computing base (DTCB) such that a tenant-specific virtual trusted secure channel linking all elements end to end can be established.

Further, it will be understood that a container may have data or workload specific keys protecting its content from a previous Edge node. As part of migration of a container, a pod controller at a source Edge node may obtain a migration key from a target Edge node pod controller where the migration key is used to wrap the container-specific keys. When the container/pod is migrated to the target Edge node, the unwrapping key is exposed to the pod controller that then decrypts the wrapped keys. The keys may now be used to perform operations on container specific data. The migration functions may be gated by properly attested Edge nodes and pod managers (as described above).

In further examples, an Edge computing system is extended to provide for orchestration of multiple applications through the use of containers (a contained, deployable unit of software that provides code and needed dependencies) in a multi-owner, multi-tenant environment. A multi-tenant orchestrator may be used to perform key management, trust anchor management, and other security functions related to the provisioning and lifecycle of the trusted 'slice' concept in FIG. 4. For instance, an Edge computing system may be configured to fulfill requests and responses for various client endpoints from multiple virtual Edge instances (and, from a cloud or remote data center). The use of these virtual Edge instances may support multiple tenants and multiple applications (e.g., augmented reality (AR)/virtual reality (VR), enterprise applications, content delivery, gaming, compute offload) simultaneously. Further, there may be multiple types of applications within the virtual Edge instances (e.g., normal applications; latency sensitive applications; latency-critical applications; user plane applications; networking applications; etc.). The virtual Edge instances may also be spanned across systems of multiple owners at different geographic locations (or respective computing systems and resources that are co-owned or co-managed by multiple owners).

For instance, each Edge node 422, 424 may implement the use of containers, such as with the use of a container "pod" 426, 428 providing a group of one or more containers. In a setting that uses one or more container pods, a pod controller or orchestrator is responsible for local control and orchestration of the containers in the pod. Various Edge node resources (e.g., storage, compute, services, depicted with hexagons) provided for the respective Edge slices 432, 434 are partitioned according to the needs of each container.

With the use of container pods, a pod controller oversees the partitioning and allocation of containers and resources. The pod controller receives instructions from an orchestrator (e.g., orchestrator 460) that instructs the controller on how best to partition physical resources and for what duration, such as by receiving key performance indicator (KPI) targets based on SLA contracts. The pod controller determines which container requires which resources and for how long in order to complete the workload and satisfy the SLA. The pod controller also manages container lifecycle operations such as: creating the container, provisioning it with resources and applications, coordinating intermediate results between multiple containers working on a distributed application together, dismantling containers when workload completes, and the like. Additionally, a pod controller may serve a security role that prevents assignment of resources until the right tenant authenticates or prevents provisioning of data or a workload to a container until an attestation result is satisfied.

Also, with the use of container pods, tenant boundaries can still exist but in the context of each pod of containers. If each tenant specific pod has a tenant specific pod controller, there will be a shared pod controller that consolidates resource allocation requests to avoid typical resource starvation situations. Further controls may be provided to ensure attestation and trustworthiness of the pod and pod controller. For instance, the orchestrator 460 may provision an attestation verification policy to local pod controllers that perform attestation verification. If an attestation satisfies a policy for a first tenant pod controller but not a second tenant pod controller, then the second pod could be migrated to a different Edge node that does satisfy it. Alternatively, the first pod may be allowed to execute and a different shared pod controller is installed and invoked prior to the second pod executing.

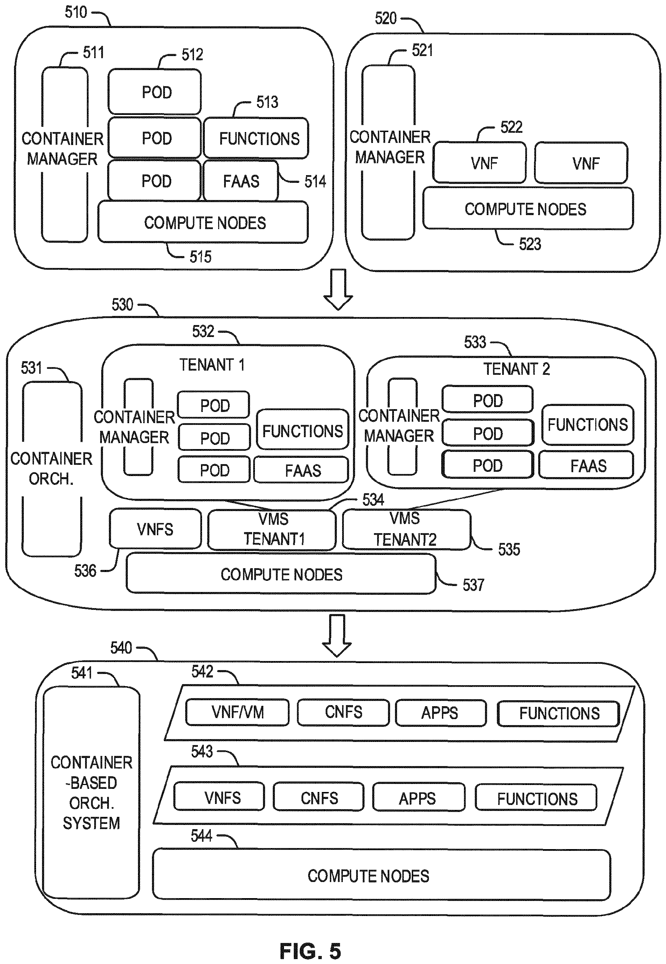

FIG. 5 illustrates additional compute arrangements deploying containers in an Edge computing system. As a simplified example, system arrangements 510, 520 depict settings in which a pod controller (e.g., container managers 511, 521, and container orchestrator 531) is adapted to launch containerized pods, functions, and functions-as-a-service instances through execution via compute nodes (515 in arrangement 510), or to separately execute containerized virtualized network functions through execution via compute nodes (523 in arrangement 520). This arrangement is adapted for use of multiple tenants in system arrangement 530 (using compute nodes 537), where containerized pods (e.g., pods 512), functions (e.g., functions 513, VNFs 522, 536), and functions-as-a-service instances (e.g., FaaS instance 514) are launched within virtual machines (e.g., VMs 534, 535 for tenants 532, 533) specific to respective tenants (aside the execution of virtualized network functions). This arrangement is further adapted for use in system arrangement 540, which provides containers 542, 543, or execution of the various functions, applications, and functions on compute nodes 544, as coordinated by an container-based orchestration system 541.

The system arrangements of depicted in FIG. 5 provides an architecture that treats VMs, Containers, and Functions equally in terms of application composition (and resulting applications are combinations of these three ingredients). Each ingredient may involve use of one or more accelerator (FPGA, ASIC) components as a local backend. In this manner, applications can be split across multiple Edge owners, coordinated by an orchestrator.

In the context of FIG. 5, the pod controller/container manager, container orchestrator, and individual nodes may provide a security enforcement point. However, tenant isolation may be orchestrated where the resources allocated to a tenant are distinct from resources allocated to a second tenant, but Edge owners cooperate to ensure resource allocations are not shared across tenant boundaries. Or resource allocations could be isolated across tenant boundaries, as tenants could allow "use" via a subscription or transaction/contract basis. In these contexts, virtualization, containerization, enclaves and hardware partitioning schemes may be used by Edge owners to enforce tenancy. Other isolation environments may include: bare metal (dedicated) equipment, virtual machines, containers, virtual machines on containers, or combinations thereof.

In further examples, aspects of software-defined or controlled silicon hardware, and other configurable hardware, may integrate with the applications, functions, and services an Edge computing system. Software defined silicon (SDSi) may be used to ensure the ability for some resource or hardware ingredient to fulfill a contract or service level agreement, based on the ingredient's ability to remediate a portion of itself or the workload (e.g., by an upgrade, reconfiguration, or provision of new features within the hardware configuration itself).

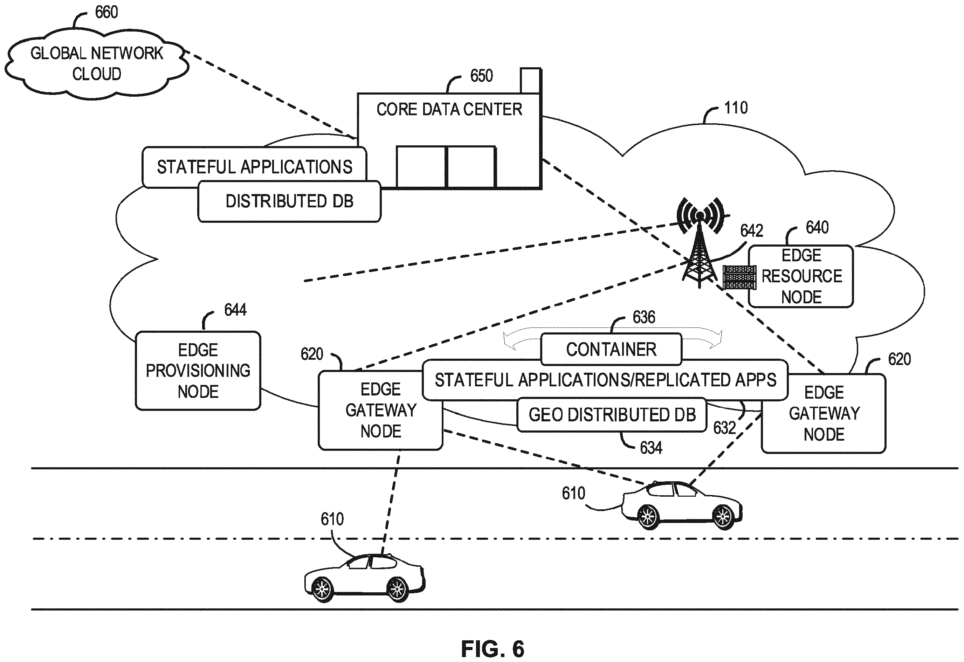

It should be appreciated that the Edge computing systems and arrangements discussed herein may be applicable in various solutions, services, and/or use cases involving mobility. As an example, FIG. 6 shows a simplified vehicle compute and communication use case involving mobile access to applications in an Edge computing system 600 that implements an Edge cloud 110. In this use case, respective client compute nodes 610 may be embodied as in-vehicle compute systems (e.g., in-vehicle navigation and/or infotainment systems) located in corresponding vehicles which communicate with the Edge gateway nodes 620 during traversal of a roadway. For instance, the Edge gateway nodes 620 may be located in a roadside cabinet or other enclosure built-into a structure having other, separate, mechanical utility, which may be placed along the roadway, at intersections of the roadway, or other locations near the roadway. As respective vehicles traverse along the roadway, the connection between its client compute node 610 and a particular Edge gateway device 620 may propagate so as to maintain a consistent connection and context for the client compute node 610. Likewise, mobile Edge nodes may aggregate at the high priority services or according to the throughput or latency resolution requirements for the underlying service(s) (e.g., in the case of drones). The respective Edge gateway devices 620 include an amount of processing and storage capabilities and, as such, some processing and/or storage of data for the client compute nodes 610 may be performed on one or more of the Edge gateway devices 620.

The Edge gateway devices 620 may communicate with one or more Edge resource nodes 640, which are illustratively embodied as compute servers, appliances or components located at or in a communication base station 642 (e.g., a base station of a cellular network). As discussed above, the respective Edge resource nodes 640 include an amount of processing and storage capabilities and, as such, some processing and/or storage of data for the client compute nodes 610 may be performed on the Edge resource node 640. For example, the processing of data that is less urgent or important may be performed by the Edge resource node 640, while the processing of data that is of a higher urgency or importance may be performed by the Edge gateway devices 620 (depending on, for example, the capabilities of each component, or information in the request indicating urgency or importance). Based on data access, data location or latency, work may continue on Edge resource nodes when the processing priorities change during the processing activity. Likewise, configurable systems or hardware resources themselves can be activated (e.g., through a local orchestrator) to provide additional resources to meet the new demand (e.g., adapt the compute resources to the workload data).

The Edge resource node(s) 640 also communicate with the core data center 650, which may include compute servers, appliances, and/or other components located in a central location (e.g., a central office of a cellular communication network). The core data center 650 may provide a gateway to the global network cloud 660 (e.g., the Internet) for the Edge cloud A110 operations formed by the Edge resource node(s) 640 and the Edge gateway devices 620. Additionally, in some examples, the core data center 650 may include an amount of processing and storage capabilities and, as such, some processing and/or storage of data for the client compute devices may be performed on the core data center 650 (e.g., processing of low urgency or importance, or high complexity).

The Edge gateway nodes 620 or the Edge resource nodes 640 may offer the use of stateful applications 632 and a geographic distributed database 634. Although the applications 632 and database 634 are illustrated as being horizontally distributed at a layer of the Edge cloud 110, it will be understood that resources, services, or other components of the application may be vertically distributed throughout the Edge cloud (including, part of the application executed at the client compute node 610, other parts at the Edge gateway nodes 620 or the Edge resource nodes 640, etc.). Additionally, as stated previously, there can be peer relationships at any level to meet service objectives and obligations. Further, the data for a specific client or application can move from Edge to Edge based on changing conditions (e.g., based on acceleration resource availability, following the car movement, etc.). For instance, based on the "rate of decay" of access, prediction can be made to identify the next owner to continue, or when the data or computational access will no longer be viable. These and other services may be utilized to complete the work that is needed to keep the transaction compliant and lossless.

In further scenarios, a container 636 (or pod of containers) may be flexibly migrated from an Edge node 620 to other Edge nodes (e.g., 620, 640, etc.) such that the container with an application and workload does not need to be reconstituted, re-compiled, re-interpreted in order for migration to work. However, in such settings, there may be some remedial or "swizzling" translation operations applied. For example, the physical hardware at node 640 may differ from Edge gateway node 620 and therefore, the hardware abstraction layer (HAL) that makes up the bottom Edge of the container will be re-mapped to the physical layer of the target Edge node. This may involve some form of late-binding technique, such as binary translation of the HAL from the container native format to the physical hardware format, or may involve mapping interfaces and operations. A pod controller may be used to drive the interface mapping as part of the container lifecycle, which includes migration to/from different hardware environments.

The scenarios encompassed by FIG. 6 may utilize various types of mobile Edge nodes, such as an Edge node hosted in a vehicle (car/truck/tram/train) or other mobile unit, as the Edge node will move to other geographic locations along the platform hosting it. With vehicle-to-vehicle communications, individual vehicles may even act as network Edge nodes for other cars, (e.g., to perform caching, reporting, data aggregation, etc.). Thus, it will be understood that the application components provided in various Edge nodes may be distributed in static or mobile settings, including coordination between some functions or operations at individual endpoint devices or the Edge gateway nodes 620, some others at the Edge resource node 640, and others in the core data center 650 or global network cloud 660.

In further configurations, the Edge computing system may implement FaaS computing capabilities through the use of respective executable applications and functions. In an example, a developer writes function code (e.g., "computer code" herein) representing one or more computer functions, and the function code is uploaded to a FaaS platform provided by, for example, an Edge node or data center. A trigger such as, for example, a service use case or an Edge processing event, initiates the execution of the function code with the FaaS platform.

In an example of FaaS, a container is used to provide an environment in which function code (e.g., an application which may be provided by a third party) is executed. The container may be any isolated-execution entity such as a process, a Docker or Kubernetes container, a virtual machine, etc. Within the Edge computing system, various datacenter, Edge, and endpoint (including mobile) devices are used to "spin up" functions (e.g., activate and/or allocate function actions) that are scaled on demand. The function code gets executed on the physical infrastructure (e.g., Edge computing node) device and underlying virtualized containers. Finally, container is "spun down" (e.g., deactivated and/or deallocated) on the infrastructure in response to the execution being completed.

Further aspects of FaaS may enable deployment of Edge functions in a service fashion, including a support of respective functions that support Edge computing as a service (Edge-as-a-Service or "EaaS"). Additional features of FaaS may include: a granular billing component that enables customers (e.g., computer code developers) to pay only when their code gets executed; common data storage to store data for reuse by one or more functions; orchestration and management among individual functions; function execution management, parallelism, and consolidation; management of container and function memory spaces; coordination of acceleration resources available for functions; and distribution of functions between containers (including "warm" containers, already deployed or operating, versus "cold" which require initialization, deployment, or configuration).

The Edge computing system 600 can include or be in communication with an Edge provisioning node 644. The Edge provisioning node 644 can distribute software such as the example computer readable instructions 882 of FIG. 8B, to various receiving parties for implementing any of the methods described herein. The example Edge provisioning node 644 may be implemented by any computer server, home server, content delivery network, virtual server, software distribution system, central facility, storage device, storage disk, storage node, data facility, cloud service, etc., capable of storing and/or transmitting software instructions (e.g., code, scripts, executable binaries, containers, packages, compressed files, and/or derivatives thereof) to other computing devices. Component(s) of the example Edge provisioning node 644 may be located in a cloud, in a local area network, in an Edge network, in a wide area network, on the Internet, and/or any other location communicatively coupled with the receiving party(ies). The receiving parties may be customers, clients, associates, users, etc. of the entity owning and/or operating the Edge provisioning node 644. For example, the entity that owns and/or operates the Edge provisioning node 644 may be a developer, a seller, and/or a licensor (or a customer and/or consumer thereof) of software instructions such as the example computer readable instructions 882 of FIG. 8B. The receiving parties may be consumers, service providers, users, retailers, OEMs, etc., who purchase and/or license the software instructions for use and/or re-sale and/or sub-licensing.

In an example, Edge provisioning node 644 includes one or more servers and one or more storage devices/disks. The storage devices and/or storage disks host computer readable instructions such as the example computer readable instructions 882 of FIG. 8B, as described below. Similarly to Edge gateway devices 620 described above, the one or more servers of the Edge provisioning node 644 are in communication with a base station 642 or other network communication entity. In some examples, the one or more servers are responsive to requests to transmit the software instructions to a requesting party as part of a commercial transaction. Payment for the delivery, sale, and/or license of the software instructions may be handled by the one or more servers of the software distribution platform and/or via a third-party payment entity. The servers enable purchasers and/or licensors to download the computer readable instructions 882 from the Edge provisioning node 644. For example, the software instructions, which may correspond to the example computer readable instructions 882 of FIG. 8B, may be downloaded to the example processor platform/s, which is to execute the computer readable instructions 882 to implement the methods described herein.

In some examples, the processor platform(s) that execute the computer readable instructions 882 can be physically located in different geographic locations, legal jurisdictions, etc. In some examples, one or more servers of the Edge provisioning node 644 periodically offer, transmit, and/or force updates to the software instructions (e.g., the example computer readable instructions 882 of FIG. 8B) to ensure improvements, patches, updates, etc. are distributed and applied to the software instructions implemented at the end user devices. In some examples, different components of the computer readable instructions 882 can be distributed from different sources and/or to different processor platforms; for example, different libraries, plug-ins, components, and other types of compute modules, whether compiled or interpreted, can be distributed from different sources and/or to different processor platforms. For example, a portion of the software instructions (e.g., a script that is not, in itself, executable) may be distributed from a first source while an interpreter (capable of executing the script) may be distributed from a second source.

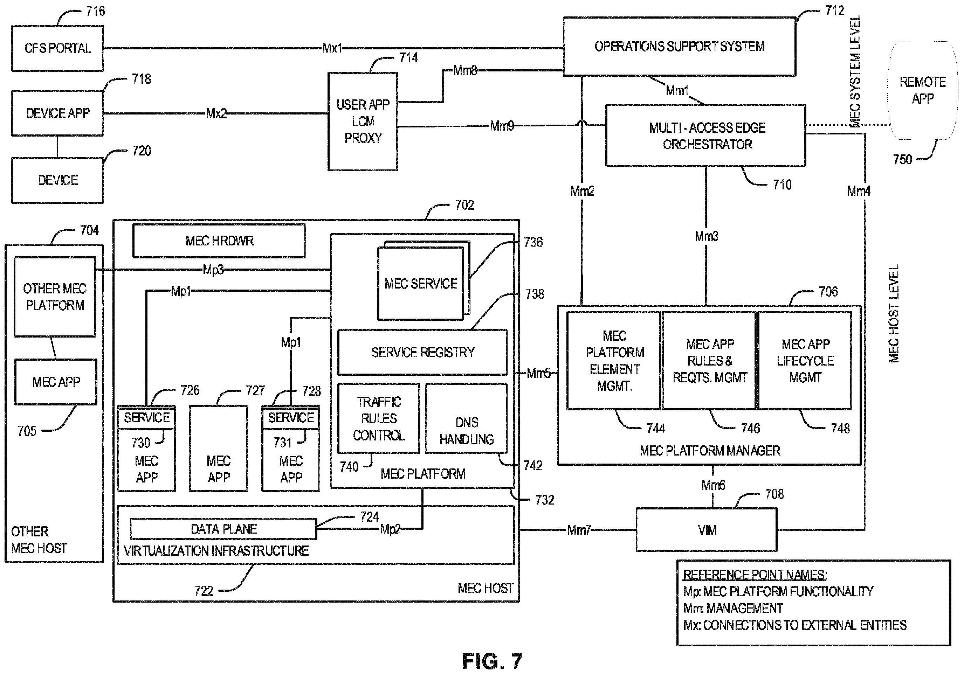

FIG. 7 illustrates a mobile Edge system reference architecture (or MEC architecture) 700, such as is indicated by ETSI MEC specifications. FIG. 7 specifically illustrates an MEC architecture 700 with MEC hosts 702 and 704 providing functionalities in accordance with the ETSI GS MEC-003 specification. In some aspects, enhancements to the MEC platform 732 and the MEC platform manager 706 may be used for providing specific computing functions within the MEC architecture 700. For example, the MEC platform 732 and the MEX platform manager 706 may be used for model validation and propagation in edge architecture.

Referring to FIG. 7, the MEC network architecture 700 can include MEC hosts 702 and 704, a virtualization infrastructure manager (VIM) 708, an MEC platform manager 706, an MEC orchestrator 710, an operations support system 712, a user app proxy 714, a UE app 718 running on UE 720, and CFS portal 716. The MEC host 702 can include a MEC platform 732 with filtering rules control component 740, a DNS handling component 742, a service registry 738, and MEC services 736. The MEC services 736 can include at least one scheduler, which can be used to select resources for instantiating MEC apps (or NFVs) 726, 727, and 728 upon virtualization infrastructure 722. The MEC apps 726 and 728 can be configured to provide services 730 and 731, which can include processing network communications traffic of different types associated with one or more wireless connections (e.g., connections to one or more RAN or telecom-core network entities). The MEC app 705 instantiated within MEC host 704 can be similar to the MEC apps 726-728 instantiated within MEC host 702. The virtualization infrastructure 722 includes a data plane 724 coupled to the MEC platform via an MP2 interface. Additional interfaces between various network entities of the MEC architecture 700 are illustrated in FIG. 7.

The MEC platform manager 706 can include MEC platform element management component 744, MEC app rules and requirements management component 746, and MEC app lifecycle management component 748. The various entities within the MEC architecture 700 can perform functionalities as disclosed by the ETSI GS MEC-003 specification. In some aspects, the remote application (or app) 750 is configured to communicate with the MEC host 702 (e.g., with the MEC apps 726-7728) via the MEC orchestrator 710 and the MEC platform manager 706.

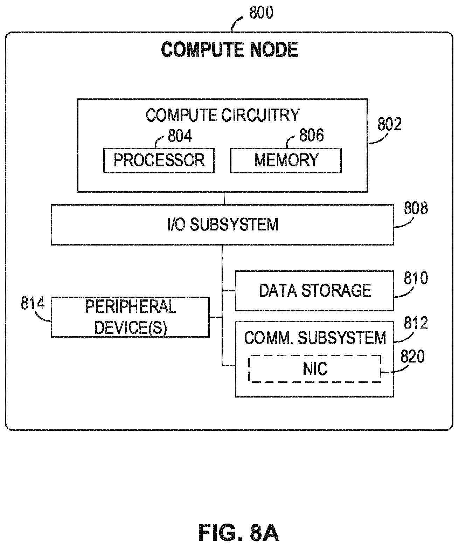

In further examples, any of the compute nodes or devices discussed with reference to the present Edge computing systems and environment may be fulfilled based on the components depicted in FIGS. 8A and 8B. Respective Edge compute nodes may be embodied as a type of device, appliance, computer, or other "thing" capable of communicating with other Edge, networking, or endpoint components. For example, an Edge compute device may be embodied as a personal computer, server, smartphone, a mobile compute device, a smart appliance, an in-vehicle compute system (e.g., a navigation system), a self-contained device having an outer case, shell, etc., or other device or system capable of performing the described functions.

In the simplified example depicted in FIG. 8A, an Edge compute node 800 includes a compute engine (also referred to herein as "compute circuitry") 802, an input/output (I/O) subsystem 808, data storage 810, a communication circuitry subsystem 812, and, optionally, one or more peripheral devices 814. In other examples, respective compute devices may include other or additional components, such as those typically found in a computer (e.g., a display, peripheral devices, etc.). Additionally, in some examples, one or more of the illustrative components may be incorporated in, or otherwise form a portion of, another component.

The compute node 800 may be embodied as any type of engine, device, or collection of devices capable of performing various compute functions. In some examples, the compute node 800 may be embodied as a single device such as an integrated circuit, an embedded system, a field-programmable gate array (FPGA), a system-on-a-chip (SOC), or other integrated system or device. In the illustrative example, the compute node 800 includes or is embodied as a processor 804 and a memory 806. The processor 804 may be embodied as any type of processor capable of performing the functions described herein (e.g., executing an application). For example, the processor 804 may be embodied as a multi-core processor(s), a microcontroller, a processing unit, a specialized or special purpose processing unit, or other processor or processing/controlling circuit.

In some examples, the processor 804 may be embodied as, include, or be coupled to an FPGA, an application specific integrated circuit (ASIC), reconfigurable hardware or hardware circuitry, or other specialized hardware to facilitate performance of the functions described herein. Also in some examples, the processor 804 may be embodied as a specialized x-processing unit (xPU) also known as a data processing unit (DPU), infrastructure processing unit (IPU), or network processing unit (NPU). Such an xPU may be embodied as a standalone circuit or circuit package, integrated within an SOC, or integrated with networking circuitry (e.g., in a SmartNIC, or enhanced SmartNIC), acceleration circuitry, storage devices, storage disks, or AI hardware (e.g., GPUs or programmed FPGAs). Such an xPU may be designed to receive programming to process one or more data streams and perform specific tasks and actions for the data streams (such as hosting microservices, performing service management or orchestration, organizing or managing server or data center hardware, managing service meshes, or collecting and distributing telemetry), outside of the CPU or general purpose processing hardware. However, it will be understood that a xPU, a SOC, a CPU, and other variations of the processor 804 may work in coordination with each other to execute many types of operations and instructions within and on behalf of the compute node 800.

The memory 806 may be embodied as any type of volatile (e.g., dynamic random access memory (DRAM), etc.) or non-volatile memory or data storage capable of performing the functions described herein. Volatile memory may be a storage medium that requires power to maintain the state of data stored by the medium. Non-limiting examples of volatile memory may include various types of random access memory (RAM), such as DRAM or static random access memory (SRAM). One particular type of DRAM that may be used in a memory module is synchronous dynamic random access memory (SDRAM).

In an example, the memory device is a block addressable memory device, such as those based on NAND or NOR technologies (for example, Single-Level Cell ("SLC"), Multi-Level Cell ("MLC"), Quad-Level Cell ("QLC"), Tri-Level Cell ("TLC"), or some other NAND). In some examples, the memory device includes a byte-addressable write-in-place three dimensional crosspoint memory device, or other byte addressable write-in-place non-volatile memory (NVM) devices, such as single or multi-level Phase Change Memory (PCM) or phase change memory with a switch (PCMS), NVM devices that use chalcogenide phase change material (for example, chalcogenide glass), resistive memory including metal oxide base, oxygen vacancy base and Conductive Bridge Random Access Memory (CB-RAM), nanowire memory, ferroelectric transistor random access memory (FeTRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, a combination of any of the above, or other suitable memory. A memory device may also include a three dimensional crosspoint memory device (e.g., Intel^{®} 3D XPoint^{™} memory), or other byte addressable write-in-place nonvolatile memory devices. The memory device may refer to the die itself and/or to a packaged memory product. In some examples, 3D crosspoint memory (e.g., Intel^{®} 3D XPoint^{™} memory) may comprise a transistor-less stackable cross point architecture in which memory cells sit at the intersection of word lines and bit lines and are individually addressable and in which bit storage is based on a change in bulk resistance. In some examples, all or a portion of the memory 806 may be integrated into the processor 804. The memory 806 may store various software and data used during operation such as one or more applications, data operated on by the application(s), libraries, and drivers.

In some examples, resistor-based and/or transistor-less memory architectures include nanometer scale phase-change memory (PCM) devices in which a volume of phase-change material resides between at least two electrodes. Portions of the example phase-change material exhibit varying degrees of crystalline phases and amorphous phases, in which varying degrees of resistance between the at least two electrodes can be measured. In some examples, the phase-change material is a chalcogenide-based glass material. Such resistive memory devices are sometimes referred to as *memristive* devices that remember the history of the current that previously flowed through them. Stored data is retrieved from example PCM devices by measuring the electrical resistance, in which the crystalline phases exhibit a relatively lower resistance value(s) (e.g., logical "0") when compared to the amorphous phases having a relatively higher resistance value(s) (e.g., logical "1").

Example PCM devices store data for long periods of time (e.g., approximately 10 years at room temperature). Write operations to example PCM devices (e.g., set to logical "0", set to logical "1", set to an intermediary resistance value) are accomplished by applying one or more current pulses to the at least two electrodes, in which the pulses have a particular current magnitude and duration. For instance, a long low current pulse (SET) applied to the at least two electrodes causes the example PCM device to reside in a low-resistance crystalline state, while a comparatively short high current pulse (RESET) applied to the at least two electrodes causes the example PCM device to reside in a high-resistance amorphous state.

In some examples, implementation of PCM devices facilitates non-von Neumann computing architectures that enable in-memory computing capabilities. Generally speaking, traditional computing architectures include a central processing unit (CPU) communicatively connected to one or more memory devices via a bus. As such, a finite amount of energy and time is consumed to transfer data between the CPU and memory, which is a known bottleneck of von Neumann computing architectures. However, PCM devices minimize and, in some cases, eliminate data transfers between the CPU and memory by performing some computing operations in-memory. Stated differently, PCM devices both store information and execute computational tasks. Such non-von Neumann computing architectures may implement vectors having a relatively high dimensionality to facilitate hyperdimensional computing, such as vectors having 10,000 bits. Relatively large bit width vectors enable computing paradigms modeled after the human brain, which also processes information analogous to wide bit vectors.

The compute circuitry 802 is communicatively coupled to other components of the compute node 800 via the I/O subsystem 808, which may be embodied as circuitry and/or components to facilitate input/output operations with the compute circuitry 802 (e.g., with the processor 804 and/or the main memory 806) and other components of the compute circuitry 802. For example, the I/O subsystem 808 may be embodied as, or otherwise include, memory controller hubs, input/output control hubs, integrated sensor hubs, firmware devices, communication links (e.g., point-to-point links, bus links, wires, cables, light guides, printed circuit board traces, etc.), and/or other components and subsystems to facilitate the input/output operations. In some examples, the I/O subsystem 808 may form a portion of a system-on-a-chip (SoC) and be incorporated, along with one or more of the processor 804, the memory 806, and other components of the compute circuitry 802, into the compute circuitry 802.

The one or more illustrative data storage devices/disks 810 may be embodied as one or more of any type(s) of physical device(s) configured for short-term or long-term storage of data such as, for example, memory devices, memory, circuitry, memory cards, flash memory, hard disk drives, solid-state drives (SSDs), and/or other data storage devices/disks. Individual data storage devices/disks 810 may include a system partition that stores data and firmware code for the data storage device/disk 810. Individual data storage devices/disks 810 may also include one or more operating system partitions that store data files and executables for operating systems depending on, for example, the type of compute node 800.

The communication circuitry 812 may be embodied as any communication circuit, device, or collection thereof, capable of enabling communications over a network between the compute circuitry 802 and another compute device (e.g., an Edge gateway of an implementing Edge computing system). The communication circuitry 812 may be configured to use any one or more communication technology (e.g., wired or wireless communications) and associated protocols (e.g., a cellular networking protocol such a 3GPP 4G or 5G standard, a wireless local area network protocol such as IEEE 802.11/Wi-Fi^{®}, a wireless wide area network protocol, Ethernet, Bluetooth^{®}, Bluetooth Low Energy, a loT protocol such as IEEE 802.15.4 or ZigBee^{®}, low-power wide-area network (LPWAN) or low-power wide-area (LPWA) protocols, etc.) to effect such communication.

The illustrative communication circuitry 812 includes a network interface controller (NIC) 820, which may also be referred to as a host fabric interface (HFI). The NIC 820 may be embodied as one or more add-in-boards, daughter cards, network interface cards, controller chips, chipsets, or other devices that may be used by the compute node 800 to connect with another compute device (e.g., an Edge gateway node). In some examples, the NIC 820 may be embodied as part of a system-on-a-chip (SoC) that includes one or more processors or included on a multichip package that also contains one or more processors. In some examples, the NIC 820 may include a local processor (not shown) and/or a local memory (not shown) that are both local to the NIC 820. In such examples, the local processor of the NIC 820 may be capable of performing one or more of the functions of the compute circuitry 802 described herein. Additionally, or alternatively, in such examples, the local memory of the NIC 820 may be integrated into one or more components of the client compute node at the board level, socket level, chip level, and/or other levels.

Additionally, in some examples, a respective compute node 800 may include one or more peripheral devices 814. Such peripheral devices 814 may include any type of peripheral device found in a compute device or server such as audio input devices, a display, other input/output devices, interface devices, and/or other peripheral devices, depending on the particular type of the compute node 800. In further examples, the compute node 800 may be embodied by a respective Edge compute node (whether a client, gateway, or aggregation node) in an Edge computing system or like forms of appliances, computers, subsystems, circuitry, or other components.

In a more detailed example, FIG. 8B illustrates a block diagram of an example of components that may be present in an Edge computing node 850 for implementing the techniques (e.g., operations, processes, methods, and methodologies) described herein. This Edge computing node 850 provides a closer view of the respective components of node 800 when implemented as or as part of a computing device (e.g., as a mobile device, a base station, server, gateway, etc.). The Edge computing node 850 may include any combinations of the hardware or logical components referenced herein, and it may include or couple with any device usable with an Edge communication network or a combination of such networks. The components may be implemented as integrated circuits (ICs), portions thereof, discrete electronic devices, or other modules, instruction sets, programmable logic or algorithms, hardware, hardware accelerators, software, firmware, or a combination thereof adapted in the Edge computing node 850, or as components otherwise incorporated within a chassis of a larger system.

The Edge computing device 850 may include processing circuitry in the form of a processor 852, which may be a microprocessor, a multi-core processor, a multithreaded processor, an ultra-low voltage processor, an embedded processor, an xPU/DPU/IPU/NPU, special purpose processing unit, specialized processing unit, or other known processing elements. The processor 852 may be a part of a system on a chip (SoC) in which the processor 852 and other components are formed into a single integrated circuit, or a single package, such as the Edison^{™} or Galileo^{™} SoC boards from Intel Corporation, Santa Clara, California. As an example, the processor 852 may include an Intel^{®} Architecture Core^{™} based CPU processor, such as a Quark^{™}, an Atom^{™}, an i3, an i5, an i7, an i9, or an MCU-class processor, or another such processor available from Intel^{®}. However, any number other processors may be used, such as available from Advanced Micro Devices, Inc. (AMD^{®}) of Sunnyvale, California, a MIPS^{®}-based design from MIPS Technologies, Inc. of Sunnyvale, California, an ARM^{®}-based design licensed from ARM Holdings, Ltd. or a customer thereof, or their licensees or adopters. The processors may include units such as an A5-A13 processor from Apple^{®} Inc., a Snapdragon^{™} processor from Qualcomm^{®} Technologies, Inc., or an OMAP^{™} processor from Texas Instruments, Inc. The processor 852 and accompanying circuitry may be provided in a single socket form factor, multiple socket form factor, or a variety of other formats, including in limited hardware configurations or configurations that include fewer than all elements shown in FIG. 8B.

The processor 852 may communicate with a system memory 854 over an interconnect 856 (e.g., a bus). Any number of memory devices may be used to provide for a given amount of system memory. As examples, the memory 754 may be random access memory (RAM) in accordance with a Joint Electron Devices Engineering Council (JEDEC) design such as the DDR or mobile DDR standards (e.g., LPDDR, LPDDR2, LPDDR3, or LPDDR4). In particular examples, a memory component may comply with a DRAM standard promulgated by JEDEC, such as JESD79F for DDR SDRAM, JESD79-2F for DDR2 SDRAM, JESD79-3F for DDR3 SDRAM, JESD79-4A for DDR4 SDRAM, JESD209 for Low Power DDR (LPDDR), JESD209-2 for LPDDR2, JESD209-3 for LPDDR3, and JESD209-4 for LPDDR4. Such standards (and similar standards) may be referred to as DDR-based standards and communication interfaces of the storage devices that implement such standards may be referred to as DDR-based interfaces. In various implementations, the individual memory devices may be of any number of different package types such as single die package (SDP), dual die package (DDP) or quad die package (Q17P). These devices, in some examples, may be directly soldered onto a motherboard to provide a lower profile solution, while in other examples the devices are configured as one or more memory modules that in turn couple to the motherboard by a given connector. Any number of other memory implementations may be used, such as other types of memory modules, e.g., dual inline memory modules (DIMMs) of different varieties including but not limited to microDIMMs or MiniDIMMs.

To provide for persistent storage of information such as data, applications, operating systems and so forth, a storage 858 may also couple to the processor 852 via the interconnect 856. In an example, the storage 858 may be implemented via a solid-state disk drive (SSDD). Other devices that may be used for the storage 858 include flash memory cards, such as Secure Digital (SD) cards, microSD cards, extreme Digital (XD) picture cards, and the like, and Universal Serial Bus (USB) flash drives. In an example, the memory device may be or may include memory devices that use chalcogenide glass, multi-threshold level NAND flash memory, NOR flash memory, single or multi-level Phase Change Memory (PCM), a resistive memory, nanowire memory, ferroelectric transistor random access memory (FeTRAM), anti-ferroelectric memory, magnetoresistive random access memory (MRAM) memory that incorporates memristor technology, resistive memory including the metal oxide base, the oxygen vacancy base and the conductive bridge Random Access Memory (CB-RAM), or spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other memory.

In low power implementations, the storage 858 may be on-die memory or registers associated with the processor 852. However, in some examples, the storage 858 may be implemented using a micro hard disk drive (HDD). Further, any number of new technologies may be used for the storage 858 in addition to, or instead of, the technologies described, such resistance change memories, phase change memories, holographic memories, or chemical memories, among others.

The components may communicate over the interconnect 856. The interconnect 856 may include any number of technologies, including industry standard architecture (ISA), extended ISA (EISA), peripheral component interconnect (PCI), peripheral component interconnect extended (PCIx), PCI express (PCIe), or any number of other technologies. The interconnect 856 may be a proprietary bus, for example, used in an SoC based system. Other bus systems may be included, such as an Inter-Integrated Circuit (I2C) interface, a Serial Peripheral Interface (SPI) interface, point to point interfaces, and a power bus, among others.

The interconnect 856 may couple the processor 852 to a transceiver 866, for communications with the connected Edge devices 862. The transceiver 866 may use any number of frequencies and protocols, such as 2.4 Gigahertz (GHz) transmissions under the IEEE 802.15.4 standard, using the Bluetooth^{®} low energy (BLE) standard, as defined by the Bluetooth^{®} Special Interest Group, or the ZigBee^{®} standard, among others. Any number of radios, configured for a particular wireless communication protocol, may be used for the connections to the connected Edge devices 862. For example, a wireless local area network (WLAN) unit may be used to implement Wi-Fi^{®} communications in accordance with the Institute of Electrical and Electronics Engineers (IEEE) 802.11 standard. In addition, wireless wide area communications, e.g., according to a cellular or other wireless wide area protocol, may occur via a wireless wide area network (WWAN) unit.

The wireless network transceiver 866 (or multiple transceivers) may communicate using multiple standards or radios for communications at a different range. For example, the Edge computing node 850 may communicate with close devices, e.g., within about 10 meters, using a local transceiver based on Bluetooth Low Energy (BLE), or another low power radio, to save power. More distant connected Edge devices 862, e.g., within about 50 meters, may be reached over ZigBee^{®} or other intermediate power radios. Both communications techniques may take place over a single radio at different power levels or may take place over separate transceivers, for example, a local transceiver using BLE and a separate mesh transceiver using ZigBee^{®}.

A wireless network transceiver 866 (e.g., a radio transceiver) may be included to communicate with devices or services in a cloud (e.g., an Edge cloud 895) via local or wide area network protocols. The wireless network transceiver 866 may be a low-power wide-area (LPWA) transceiver that follows the IEEE 802.15.4, or IEEE 802.15.4g standards, among others. The Edge computing node 850 may communicate over a wide area using LoRaWAN^{™} (Long Range Wide Area Network) developed by Semtech and the LoRa Alliance. The techniques described herein are not limited to these technologies but may be used with any number of other cloud transceivers that implement long range, low bandwidth communications, such as Sigfox, and other technologies. Further, other communications techniques, such as time-slotted channel hopping, described in the IEEE 802.15.4e specification may be used.

Any number of other radio communications and protocols may be used in addition to the systems mentioned for the wireless network transceiver 866, as described herein. For example, the transceiver 866 may include a cellular transceiver that uses spread spectrum (SPA/SAS) communications for implementing high-speed communications. Further, any number of other protocols may be used, such as Wi-Fi^{®} networks for medium speed communications and provision of network communications. The transceiver 866 may include radios that are compatible with any number of 3GPP (Third Generation Partnership Project) specifications, such as Long Term Evolution (LTE) and 5th Generation (5G) communication systems, discussed in further detail at the end of the present disclosure. A network interface controller (NIC) 868 may be included to provide a wired communication to nodes of the Edge cloud 895 or to other devices, such as the connected Edge devices 862 (e.g., operating in a mesh). The wired communication may provide an Ethernet connection or may be based on other types of networks, such as Controller Area Network (CAN), Local Interconnect Network (LIN), DeviceNet, ControlNet, Data Highway+, PROFIBUS, or PROFINET, among many others. An additional NIC 868 may be included to enable connecting to a second network, for example, a first NIC 868 providing communications to the cloud over Ethernet, and a second NIC 868 providing communications to other devices over another type of network.

Given the variety of types of applicable communications from the device to another component or network, applicable communications circuitry used by the device may include or be embodied by any one or more of components 864, 866, 868, or 870. Accordingly, in various examples, applicable means for communicating (e.g., receiving, transmitting, etc.) may be embodied by such communications circuitry.

The Edge computing node 850 may include or be coupled to acceleration circuitry 864, which may be embodied by one or more artificial intelligence (Al) accelerators, a neural compute stick, neuromorphic hardware, an FPGA, an arrangement of GPUs, an arrangement of xPUs/DPUs/IPU/NPUs, one or more SoCs, one or more CPUs, one or more digital signal processors, dedicated ASICs, or other forms of specialized processors or circuitry designed to accomplish one or more specialized tasks. These tasks may include AI processing (including machine learning, training, inferencing, and classification operations), visual data processing, network data processing, object detection, rule analysis, or the like. These tasks also may include the specific Edge computing tasks for service management and service operations discussed elsewhere in this document.

The interconnect 856 may couple the processor 852 to a sensor hub or external interface 870 that is used to connect additional devices or subsystems. The devices may include sensors 872, such as accelerometers, level sensors, flow sensors, optical light sensors, camera sensors, temperature sensors, global navigation system (e.g., GPS) sensors, pressure sensors, barometric pressure sensors, and the like. The hub or interface 870 further may be used to connect the Edge computing node 850 to actuators 874, such as power switches, valve actuators, an audible sound generator, a visual warning device, and the like.

In some optional examples, various input/output (I/O) devices may be present within or connected to, the Edge computing node 850. For example, a display or other output device 884 may be included to show information, such as sensor readings or actuator position. An input device 886, such as a touch screen or keypad may be included to accept input. An output device 884 may include any number of forms of audio or visual display, including simple visual outputs such as binary status indicators (e.g., light-emitting diodes (LEDs)) and multi-character visual outputs, or more complex outputs such as display screens (e.g., liquid crystal display (LCD) screens), with the output of characters, graphics, multimedia objects, and the like being generated or produced from the operation of the Edge computing node 850. A display or console hardware, in the context of the present system, may be used to provide output and receive input of an Edge computing system; to manage components or services of an Edge computing system; identify a state of an Edge computing component or service; or to conduct any other number of management or administration functions or service use cases.

A battery 876 may power the Edge computing node 850, although, in examples in which the Edge computing node 850 is mounted in a fixed location, it may have a power supply coupled to an electrical grid, or the battery may be used as a backup or for temporary capabilities. The battery 876 may be a lithium ion battery, or a metal-air battery, such as a zinc-air battery, an aluminum-air battery, a lithium-air battery, and the like.

A battery monitor/charger 878 may be included in the Edge computing node 850 to track the state of charge (SoCh) of the battery 876, if included. The battery monitor/charger 878 may be used to monitor other parameters of the battery 876 to provide failure predictions, such as the state of health (SoH) and the state of function (SoF) of the battery 876. The battery monitor/charger 878 may include a battery monitoring integrated circuit, such as an LTC4020 or an LTC2990 from Linear Technologies, an ADT7488A from ON Semiconductor of Phoenix Arizona, or an IC from the UCD90xxx family from Texas Instruments of Dallas, TX. The battery monitor/charger 878 may communicate the information on the battery 876 to the processor 852 over the interconnect 856. The battery monitor/charger 878 may also include an analog-to-digital (ADC) converter that enables the processor 852 to directly monitor the voltage of the battery 876 or the current flow from the battery 876. The battery parameters may be used to determine actions that the Edge computing node 850 may perform, such as transmission frequency, mesh network operation, sensing frequency, and the like.

A power block 880, or other power supply coupled to a grid, may be coupled with the battery monitor/charger 878 to charge the battery 876. In some examples, the power block 880 may be replaced with a wireless power receiver to obtain the power wirelessly, for example, through a loop antenna in the Edge computing node 850. A wireless battery charging circuit, such as an LTC4020 chip from Linear Technologies of Milpitas, California, among others, may be included in the battery monitor/charger 878. The specific charging circuits may be selected based on the size of the battery 876, and thus, the current required. The charging may be performed using the Airfuel standard promulgated by the Airfuel Alliance, the Qi wireless charging standard promulgated by the Wireless Power Consortium, or the Rezence charging standard, promulgated by the Alliance for Wireless Power, among others.

The storage 858 may include instructions 882 in the form of software, firmware, or hardware commands to implement the techniques described herein. Although such instructions 882 are shown as code blocks included in the memory 854 and the storage 858, it may be understood that any of the code blocks may be replaced with hardwired circuits, for example, built into an application specific integrated circuit (ASIC).

In an example, the instructions 882 provided via the memory 854, the storage 858, or the processor 852 may be embodied as a non-transitory, machine-readable medium 860 including code to direct the processor 852 to perform electronic operations in the Edge computing node 850. The processor 852 may access the non-transitory, machine-readable medium 860 over the interconnect 856. For instance, the non-transitory, machine-readable medium 860 may be embodied by devices described for the storage 858 or may include specific storage units such as storage devices and/or storage disks that include optical disks (e.g., digital versatile disk (DVD), compact disk (CD), CD-ROM, Blu-ray disk), flash drives, floppy disks, hard drives (e.g., SSDs), or any number of other hardware devices in which information is stored for any duration (e.g., for extended time periods, permanently, for brief instances, for temporarily buffering, and/or caching). The non-transitory, machine-readable medium 860 may include instructions to direct the processor 852 to perform a specific sequence or flow of actions, for example, as described with respect to the flowchart(s) and block diagram(s) of operations and functionality depicted above. As used herein, the terms "machine-readable medium" and "computer-readable medium" are interchangeable. As used herein, the term "non-transitory computer-readable medium" is expressly defined to include any type of computer readable storage device and/or storage disk and to exclude propagating signals and to exclude transmission media.

Also in a specific example, the instructions 882 on the processor 852 (separately, or in combination with the instructions 882 of the machine readable medium 860) may configure execution or operation of a trusted execution environment (TEE) 890. In an example, the TEE 890 operates as a protected area accessible to the processor 852 for secure execution of instructions and secure access to data. Various implementations of the TEE 890, and an accompanying secure area in the processor 852 or the memory 854 may be provided, for instance, through use of Intel^{®} Software Guard Extensions (SGX) or ARM^{®} TrustZone* hardware security extensions, Intel^{®} Management Engine (ME), or Intel^{®} Converged Security Manageability Engine (CSME). Other aspects of security hardening, hardware roots-of-trust, and trusted or protected operations may be implemented in the device 850 through the TEE 890 and the processor 852.

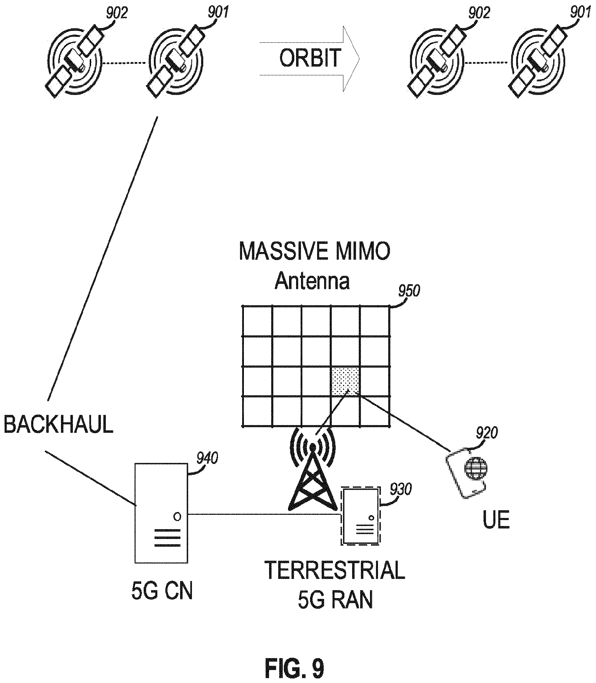

FIG. 9 illustrates network connectivity in non-terrestrial (satellite) and terrestrial (mobile cellular network) settings, according to an example. As shown, a satellite constellation may include multiple satellites 901, 902, which are connected to each other and to one or more terrestrial networks. Specifically, the satellite constellation is connected to a backhaul network, which is in turn connected to a 5G core network 940. The 5G core network is used to support 5G communication operations at the satellite network and at a terrestrial 5G radio access network (RAN) 930.

FIG. 9 also depicts the use of the terrestrial 5G RAN 930, to provide radio connectivity to a user equipment (UE) 920 via a massive MIMO antenna 950. It will be understood that a variety of network communication components and units are not depicted in FIG. 9 for purposes of simplicity. With these basic entities in mind, the following techniques describe ways in which terrestrial and satellite networks can be extended for various Edge computing scenarios.

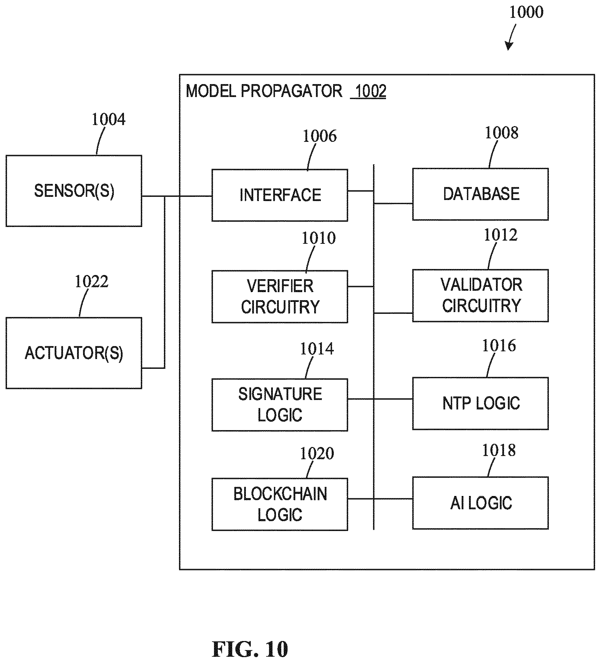

FIG. 10 is a block diagram of an example device or system 1000 to propagate one or more models in edge architecture. The example device 1000 includes an example model propagator 1002 and one or more example sensor(s) 1004. The example model propagator 1002 includes an example interface 1006, an example database 1008, an example verifier circuitry 1010, an example validator circuitry 1012, example signature logic 1014, example network timing protocol (NTP) logic 1016, example artificial intelligence (Al) logic 1018, example blockchain logic 1020, and one or more example actuator(s) 1022. The device 1000 can be incorporated into many examples in different ranges including in a back office, on a server, on an edge device, etc. For example, the device 1000 may be incorporated in automobiles and/or base stations along or near roads for use in modeling traffic patterns, accident probability, etc. In some examples, the device 1000 may be incorporated in agricultural equipment for modeling field conditions. The device 1000 may be incorporated in a distributed network of devices that model weather conditions, weather forecasting, air quality, etc. In some examples, the device 100 may be incorporated in street cabinets hosting one or more edge servers. In some examples, the device 100 may be incorporated in a telecommunications central office hosting one or more edge servers. In some examples, the device 100 may be incorporated in a data center edge hosting one or more edge servers. In some examples, the device 100 may be used wherever edge servers are used.

The example sensor(s) 1004 are included with the device 1000 or communicatively coupled to the device 1000. The sensor(s) 1004 gather data and/or produce data based on structure of the device 1000, operating conditions of the device 1000, and/or geographic location of the device 1000. For example, the data may include weather conditions, time, temperature, location, road conditions, day light levels, street light conditions, speed, device identification, volume, operating conditions of one or more sub-systems of the device 1000, power level, current, voltage, wattage, torque, device maintenance history and/or conditions, and/or other data used during, produced during, and/or otherwise indicative of operation of the device. The sensor(s) 1004 communicate data to the model propagator 1002 via the interface 1006. In some examples, the interface 1006 is a network interface card. In other examples, other network adapters are used to communicatively couple the model propagator 1002 with the sensor(s) 1004, the actuator(s) 1020, and/or other edge station(s) or appliance(s).

The sensor(s) 1004 also may include a communication device such as, for example, a transceiver that receives a model. For example, the model may be a model received from another device via edge architecture. The model and any or all of the data from the sensor(s) 1004 maybe stored in memory including, for example, the example data base 1008. The database 1008 also may include information identifying the device 1000 for use, for example, in hashing and/or signaturing. For example, the database 1008 may include an unclonable function that is used to uniquely identify the device 1000 and the set of sensors 1004 related to the device 1000. The database 1008 may include hardware and firmware meta-data that is used to uniquely identify different hardware elements of the device 1000. In some examples, the hardware and/or firmware metadata includes a list of hashes for the different hardware and/or firmware elements. The database 1008 may include software metadata that is used to uniquely identify different software elements used for the data collection and/or operation of the device 1000. In some examples, the software metadata includes a list of hashes for different libraries or applications used to collect the data and/or operate the device 1000.

As disclosed herein, in some examples, the device 1000 receives a model from other devices in the edge architecture. In some examples, the device 1000 generates a model. For example, the blockchain logic 1020 creates a model for a specific use. The model is based on one or more algorithms that use data from the sensors 1004 as input to calculate or determine an expected output. For example, the blockchain logic 1020 may create a model to determine a probability of an accident due to a slippery road. The AI logic 1018 also executes and/or trains the model using historical and/or recently (i.e., just) gathered data. Data including speed, vehicle weight, tire age, tire thread type, tire conditions, and temperature may be used to execute the example model related to a slippery road condition. Other data may be used in other examples. In some examples, the AI logic 1018 includes a processor, a CPU, a compute, and/or an acceleration.

In some examples, the sensor(s) 1004 include sensoring logic that collects and signs data from the sensors 1004 and sends the data to the signature logic 1014. Metadata of the collected or generated data is important to provide context and details regarding when and how data was collected and/or generated. The signature logic 1014 accesses and/or collects the unique identification of the device 100 (e.g., the unclonable function), the hardware metadata, the firmware metadata, the software metadata, data from the sensors 1004, metadata of the data from the sensors 1004, and time stamp data. The time stamp data may be generated by the NTP logic 1016. In some examples, the NTP logic 1016 provides universal time stamping. The signature logic 1014 uses some or all of this information to create a hash or signature to add to a blockchain associated with the model. The blockchain logic 1020 adds the hash and/or signatures to the model and transmits or propagates the model and blockchain through the edge architecture. The blockchain is used for model validation and verification as disclosed herein. In some examples, the signature logic 1014 generates different types of signatures. For example, the signature logic 1014 hashes and signs a model generated by an edge device. In another example, a model with a hash and signature is sent to a first number of edge devices (e.g., peer devices) that attest the model, and the respective signature logic 1014 of those edge devices generate a hash and signature out of the attestation results and share the hash, signature, and attestation among multiple edge devices. When there is a quorum, that is when a second number of the edge devices satisfying a threshold of the first number of edge devices attest the model, the signature logic 1014 generates a signature of the attestations for addition to the blockchain.

The blockchain logic 1020 determines to which peer devices or other edge devices to send the model. Peer devices, edge appliances, edge devices, user devices, etc. are used interchangeably herein. As the device 1000 and/or other peer devices move, there are different peers nearby that can be used for model verification. In some examples, a number of peer devices that are nearby or otherwise in range are evaluated to determine a subset number of peer device to which to send the model. In some examples, the blockchain logic 1020 assesses the distance between the device 1000 and peer devices. The distance may be measured in time or length. For example, the blockchain logic 1020 may use a constellation configuration to determine which peers are nearby. In some examples, a constellation configuration uses a logic that can be configured in an out of band fashion in order to configure the set of peer devices that are part of the private blockchain and that are able to validate models. A peer device may be considered a nearby device based on how close the peer device is to the device 1000 and/or an edge location. For example, a nearby per device may be within a threshold amount of time and/or a threshold distance (e.g., a second, 30 milli-seconds, etc.). In some examples, the thresholds are based on location (e.g., smaller for urban areas and larger for rural areas). Peer devices also maybe selected based on their internet protocol address and/or certification, which may be used to identify a peer device. In some examples, if a model is to be verified based on a validation from first number of peer devices, the blockchain logic 1020 selects a second number of peer devices, larger than the first number, for receipt of the model.

In some examples, when a device such as, for example, the device 1000 or a peer device receives a model, the validator circuitry 1012 assesses if the device 1000 is suitable to validate the model. In some examples, the validator circuitry 1012 incorporates one or more of the signature logic 1014, the Al logic 1018, the blockchain logic 1020, and/or other elements of the device 1000. The validator circuitry 1012 determines validation credentials of the device 1000 based on the model. For example, if a model may cover determining the probability of accident based on a road condition in a first location (e.g., Spain). The device 1000 may be incorporated or otherwise associated with a vehicle from a second location (e.g., Norway) traveling in the first location. The validator circuitry 1012 may determine that the device 1000 in the vehicle from the second location does not have the proper data to validate the model. For example, the historical data stored in the database 1008 may be based on snowier road conditions, lower levels of daylight in the winter, and/or other disparate conditions. In some examples, the factors or data used in the model are used to define what peers are qualified to validate the model. If the validator circuitry 1012 determines that the device 1000 cannot or is otherwise not best suited to validate the model, the model propagator 1002 may ignore the model. In this example, the model is not propagated. In other words, in this example, the AI logic 1018 does not execute or feed the model, and the blockchain logic 1020 does not add a verification to the blockchain of the model for propagation through the edge architecture.

Nonetheless, in this example, while the validator circuitry 1012 determines that the device 1000 is not suited to validate the model, the device 1000 may use the model. For example, the verifier circuitry 1010 may determine that the model has been verified based on validation by a threshold number of peer devices. In some examples, the verifier circuitry 1010 incorporates one or more of the signature logic 1014, the AI logic 1018, the blockchain logic 1020, and/or other elements of the device 1000. In some examples, the verifier determines that a model has been verified when there are at least a threshold number of attestations or validations of the model from peer devices in the blockchain. In some examples, if the verifier circuitry 1010 determines that a model has not been verified, the blockchain logic 1020 sends the model to peer devices for validation or attestation.

In some examples, the validator circuitry 1012 determines that the device 1000 is able to validate a model. In this example, the Al logic 1018 access data from the sensors 1004 and executes the models based on the data. The data may be historical data and/or data gathered at the time of the execution of the model. When the Al logic 1018 determines that the model output is within a threshold of an expected output, the model may be attested. The blockchain logic 1020 generates the model plus signature in the blockchain using signature information from the signature logic 1014 including, for example, hash and/or signature information related to the different hardware (e.g., CPU, training accelerators, etc.), different software and/or firmware ingredients (e.g., training software stack, etc.), and the data metadata. After the blockchain logic 1020 attests to and signs the model, the model can be propagated through the edge architecture.

If the verifier circuitry 1010 determines that the model is verified based on the attestations in the blockchain, the device 1000 may execute the model. Verification of the model indicates that the model is accurate. In other words, a model is verified as producing accurate output when a number of edge devices (e.g., a threshold number, a quorum, etc.) provide attestation of the model. In some examples, to initiate execution or to execute a mode, the AI logic 1018 accesses gathered data and feeds or executes the model by performing model computations. The model propagator 1002 may then cause one or more actuator(s) to take one or more action(s) based on the output of the model. For example, with the slippery road model example, brakes on a vehicle may be actuated to slow a vehicle associated with the device 1000. In another example, a traffic light may be controlled to slow a flow of traffic.

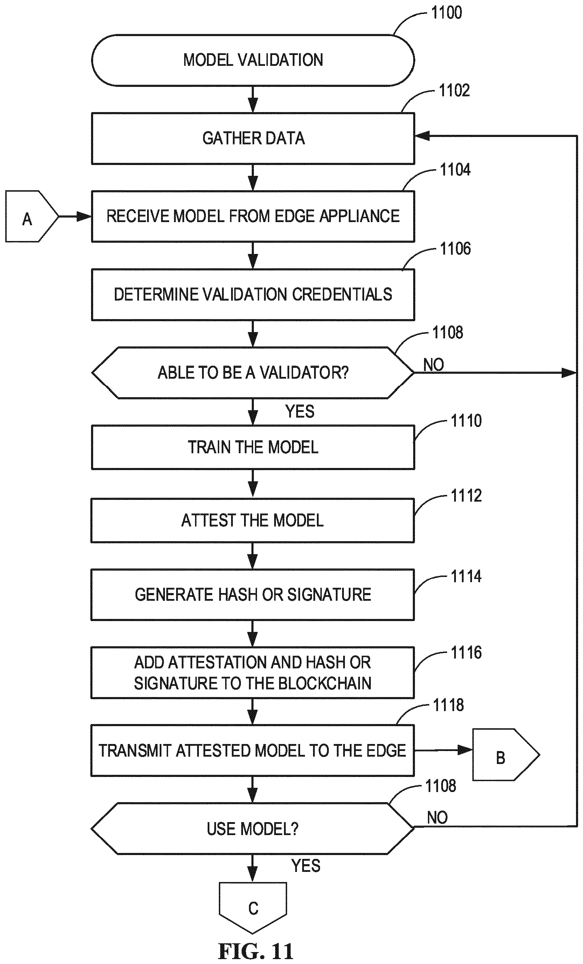

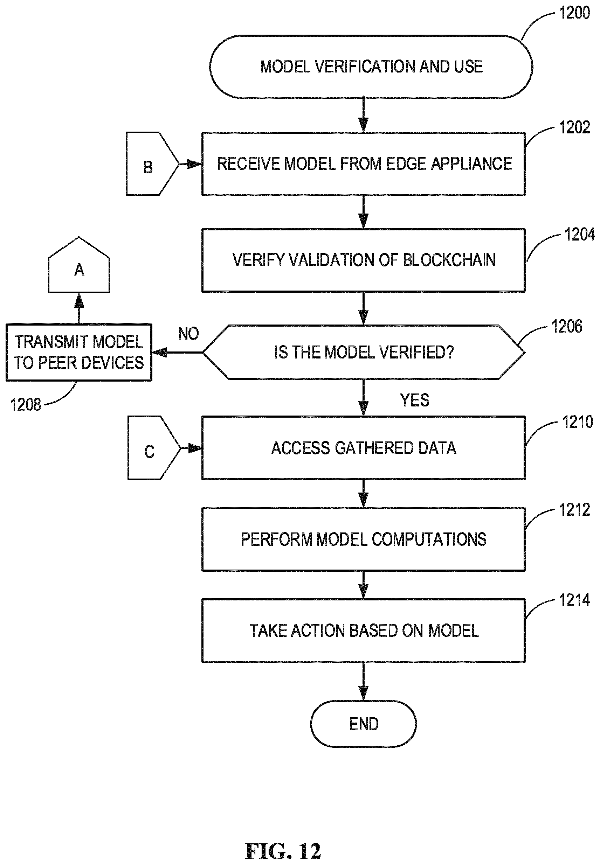

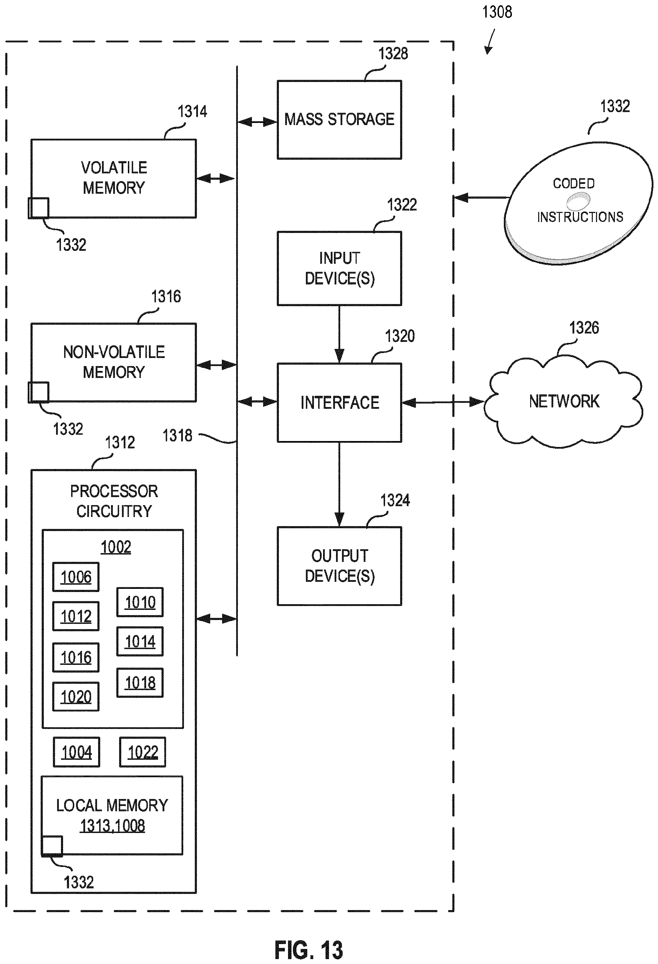

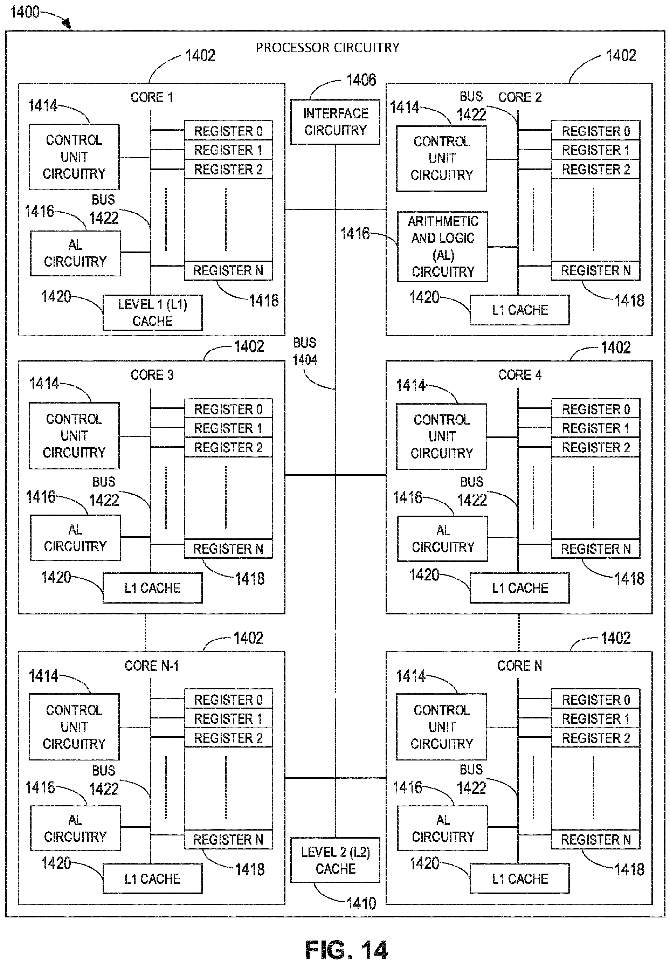

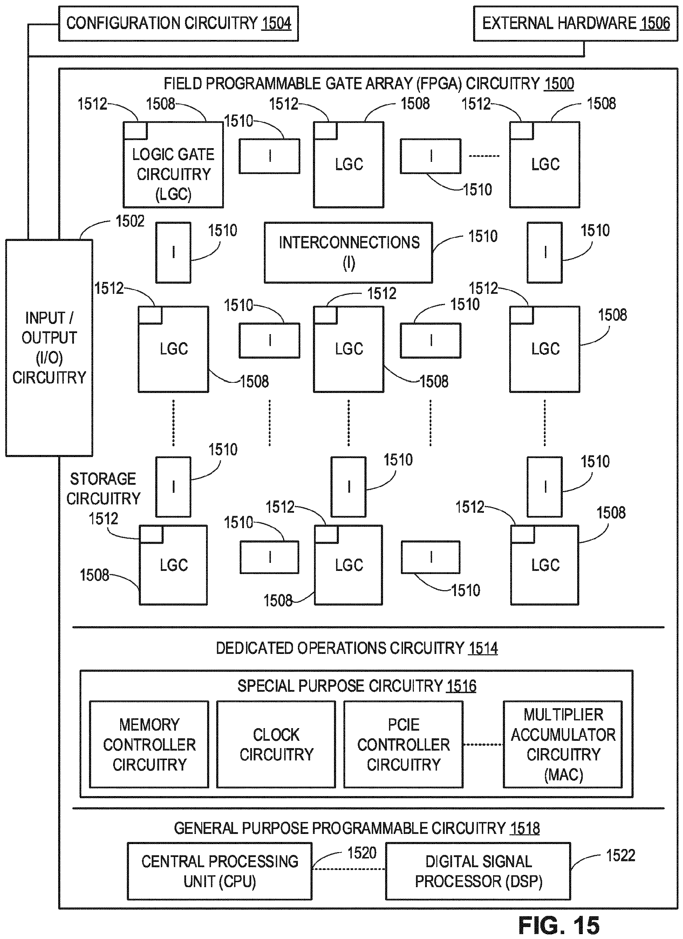

In some examples, the apparatus or device 1000 includes means for accessing a model. For example, the means for accessing may be implemented by the interface 1006. In some examples, the interface 1006may be implemented by machine executable instructions such as that implemented by at least blocks 1104 of FIG. 11 and 1202 of FIG. 12 executed by processor circuitry, which may be implemented by the example processor circuitry 1312 of FIG. 13, the example processor circuitry 1400 of FIG. 14, and/or the example Field Programmable Gate Array (FPGA) circuitry 1500 of FIG. 15. In other examples, the interface 1006 is implemented by other hardware logic circuitry, hardware implemented state machines, and/or any other combination of hardware, software, and/or firmware. For example, the interface 1006 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

In some examples, the apparatus or device 1000 includes means for processing a model. For example, the processing means may be implemented by the verifier circuitry 1010, the validator circuitry 1012, the signature logic 1014, the NTP logic 1016, the Al logic 1018, the blockchain logic 1020, and/or the model propagator 1002. In some examples, the verifier circuitry 1010, the validator circuitry 1012, the signature logic 1014, the NTP logic 1016, the Al logic 1018, the blockchain logic 1020, and/or the model propagator 1002 may be implemented by machine executable instructions such as that implemented by at least blocks 1106-1120 of FIG. 11 and 1204-1214 of FIG. 12 executed by processor circuitry, which may be implemented by the example processor circuitry 1312 of FIG. 13, the example processor circuitry 1400 of FIG. 14, and/or the example FPGA circuitry 1500 of FIG. 15. In other examples, the verifier circuitry 1010, the validator circuitry 1012, the signature logic 1014, the NTP logic 1016, the Al logic 1018, the blockchain logic 1020, and/or the model propagator 1002 is implemented by other hardware logic circuitry, hardware implemented state machines, and/or any other combination of hardware, software, and/or firmware. For example, the verifier circuitry 1010, the validator circuitry 1012, the signature logic 1014, the NTP logic 1016, the AI logic 1018, the blockchain logic 1020, and/or the model propagator 1002 may be implemented by at least one or more hardware circuits (e.g., processor circuitry, discrete and/or integrated analog and/or digital circuitry, an FPGA, an ASIC, a comparator, an op-amp, a logic circuit, etc.) structured to perform the corresponding operation without executing software or firmware, but other structures are likewise appropriate.

While an example manner of implementing the device 1000 is illustrated in FIG. 10, one or more of the elements, processes, and/or devices illustrated in FIG. 10 may be combined, divided, rearranged, omitted, eliminated, and/or implemented in any other way. Further, the example model propagator 1002, the example sensor(s) 1004, the example interface 1006, the example database 1008, the example verifier circuitry 1010, the example validator circuitry 1012, the example signature logic 1014, the example NTP logic 1016, the example AI logic 1018, the example blockchain logic 1020, the example actuator(s) 1020, and/or, more generally, the example device 1000 of FIG. 10, may be implemented by hardware, software, firmware, and/or any combination of hardware, software, and/or firmware. Thus, for example, any of the example model propagator 1002, the example sensor(s) 1004, the example interface 1006, the example database 1008, the example verifier circuitry 1010, the example validator circuitry 1012, the example signature logic 1014, the example NTP logic 1016, the example Al logic 1018, the example blockchain logic 1020, the example actuator(s) 1020, and/or, more generally, the example device 1000, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. When reading any of the apparatus or system claims of this patent to cover a purely software and/or firmware implementation, at least one of the example model propagator 1002, the example sensor(s) 1004, the example interface 1006, the example database 1008, the example verifier circuitry 1010, the example validator circuitry 1012, the example signature logic 1014, the example NTP logic 1016, the example AI logic 1018, the example blockchain logic 1020, the example actuator(s) 1020, and/or the example device 1000 is/are hereby expressly defined to include a non-transitory computer readable storage device or storage disk such as a memory, a digital versatile disk (DVD), a compact disk (CD), a Blu-ray disk, etc., including the software and/or firmware. Further still, the example device 1000 of FIG. 10 may include one or more elements, processes, and/or devices in addition to, or instead of, those illustrated in FIG. 10, and/or may include more than one of any or all of the illustrated elements, processes and devices.

Flowcharts representative of example hardware logic circuitry, machine readable instructions, hardware implemented state machines, and/or any combination thereof for implementing the device 1000 of FIG. 10 are shown in FIGS. 11 and 12. The machine readable instructions may be one or more executable programs or portion(s) of an executable program for execution by processor circuitry, such as the processor circuitry 1312 shown in the example processor platform 1300 discussed below in connection with FIG. 13 and/or the example processor circuitry 1400, 1500 discussed below in connection with FIGS. 14 and/or 15. The program may be embodied in software stored on one or more non-transitory computer readable storage media such as a CD, a floppy disk, a hard disk drive (HDD), a DVD, a Blu-ray disk, a volatile memory (e.g., Random Access Memory (RAM) of any type, etc.), or a non-volatile memory (e.g., FLASH memory, an HDD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowchart illustrated in FIGS. 11 and 12, many other methods of implementing the example device 1000 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an op-amp, a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc.).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 11 and 12 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 11 is a flowchart representative of example machine readable instructions and/or example operations 1100 that may be executed and/or instantiated by processor circuitry for model validation. Model validation includes devices such as, for example, edge appliances or peer devices determining if they are credentialed or suitable to validate a model. The machine readable instructions and/or operations 1100 of FIG. 11 begin at block 402, at which the one or more sensor(s) 1004 of the device 1000 gather data. The interface 1006 received a model from an edge appliance (block 1104). In some examples, the device 1000 is a peer device, and the model is received from another peer device (block A, FIG. 12).

The validator circuitry 1012 determines the validation credentials of the device 1000 (block 1106). In some examples, the validation credentials is based on the data to be used to execute the model, the model algorithms, the model output etc. If the validator circuitry 1012 determines that the device 1000 is not able to be a validator (block 1108), the example process 1100 continues with the sensor(s) 1004 gathering data (block 1102). In some examples, the model propagator 1002 also ignores the model by, for example, not executing the model. In other examples, if the validator circuitry 1012 determines that the device 1000 is not able to be a validator (block 1108), the example process 1100 may continue with the blockchain logic 1020 determining if the device 1000 will use the model (block 1120).

If the validator circuitry 1012 determines that the device 1000 is able to be a validator (block 1108), the example process 1100 continues with the Al logic 1016 training the model (block 1110). For example, the AI logic 1016 may access the data gathered by the sensor(s) and execute the model based on the data.

The blockchain logic 1020 attests the model (block 1112) when the results of the training and/or execution of the model correlate with expected output. For example, the blockchain logic 1020 attests the model when the results of the training and/or execution of the model are within a threshold amount of an expected output.

The signature logic 1014 generates a hash or signature (block 1114) indicative of one or more of the device 1000, one or more elements of the hardware of the device 1000, one or more elements of the software of the device, one or more elements of the firmware of the device 1000, one or more elements of the data gathered by the sensor(s) 10004 and/or including conditions under which the data was gathered. The blockchain logic 1020 adds the signature, hash, and attestation or verification of the model to a blockchain associated with the model (block 1116). The blockchain logic 1020 transmits, via the interface 1006, the attested model via the edge architecture (block 1118).

In addition, the example process 1100 may continue with the blockchain logic 1020 determining if the device 1000 will use the model (block 1120). If the blockchain logic 1020 determines that the device 1000 will use not the model (block 1020), the example process continues with the sensor(s) 1004 gathering data (block 1102). If the blockchain logic 1020 determines that device 1000 will use the model (block 1120), the example process 1100 continues (block C) with accessing the gathered data (block 1210, FIG. 12).

FIG. 12 is a flowchart representative of example machine readable instructions and/or example operations 1200 that may be executed and/or instantiated by processor circuitry for model verification and use. Model verification includes devices such as, for example, edge appliances or peer devices determining if a model has been verified or attested to by other devices. The machine readable instructions and/or operations 1200 of FIG. 12 include the interface 1006 receiving a model from another device such as, for example, another edge device, edge appliance, and/or peer device (block 1202; and block B, FIG. 11).

The verifier circuitry 1010 verifies the validation of the blockchain (block 1204). For example, the verifier circuitry 1010 determines how many attestations from other devices are include in the blockchain of the model. The verifier circuitry 1010 determines if the model has been verified (block 1206). For example, the verifier circuitry 1010 determines if a number of attestations of the model satisfies a threshold number. In some examples, if the verifier circuitry 1010 determines that the model is not verified (block 1206), the blockchain logic 1020 transmits, via the interface 1006), the model to peer devices (block 1208) for validation and attestation. The process proceeds via block A where the other peer device receives the model via the edge architecture (block 1104, FIG. 11).

In some examples, if the verifier circuitry 1010 determines that the model is verified (block 1206), the example process 1200 continues with the AI logic 1018 accessing the gathered data (block 1210). In some examples, the data is historical data, and in some examples the data is gathered at that moment.

The AI logic 1018 executes the model by performing model computation(s) (block 1212). Based on the output from the model, the model propagator 1002 directs one or more of the actuator(s) 1022 to take an action based on the model (block 1214). Thereafter the example process 1200 ends.

FIG. 13 is a block diagram of an example processor platform 1300 structured to execute and/or instantiate the machine readable instructions and/or operations of FIGS. 11 and 12 to implement the device 1000 of FIG. 10. The processor platform 1300 can be, for example, a server, a personal computer, a workstation, a self-learning machine (e.g., a neural network), a mobile device (e.g., a cell phone, a smart phone, a tablet such as an iPad^{™}), a personal digital assistant (PDA), an Internet appliance, a DVD player, a CD player, a digital video recorder, a Blu-ray player, a gaming console, a personal video recorder, a set top box, a headset (e.g., an augmented reality (AR) headset, a virtual reality (VR) headset, etc.) or other wearable device, or any other type of computing device.

The processor platform 1300 of the illustrated example includes processor circuitry 1312. The processor circuitry 1312 of the illustrated example is hardware. For example, the processor circuitry 1312 can be implemented by one or more integrated circuits, logic circuits, FPGAs microprocessors, CPUs, GPUs, DSPs, and/or microcontrollers from any desired family or manufacturer. The processor circuitry 1312 may be implemented by one or more semiconductor based (e.g., silicon based) devices. In this example, the processor circuitry 1312 implements the example model propagator 1002, the example sensor(s) 1004, the example interface 1006, the example verifier circuitry 1010, the example validator circuitry 1012, the example signature logic 1014, the example NTP logic 1016, the example Al logic 1018, the example blockchain logic 1020, and the example actuator(s) 1020.

The processor circuitry 1312 of the illustrated example includes a local memory 1313 (e.g., a cache, registers, etc.). The processor circuitry 1312 of the illustrated example is in communication with a main memory including a volatile memory 1314 and a non-volatile memory 1316 by a bus 1318. The volatile memory 1314 may be implemented by Synchronous Dynamic Random Access Memory (SDRAM), Dynamic Random Access Memory (DRAM), RAMBUS^{®} Dynamic Random Access Memory (RDRAM^{®}), and/or any other type of RAM device. The non-volatile memory 1316 may be implemented by flash memory and/or any other desired type of memory device. Access to the main memory 1314, 1316 of the illustrated example is controlled by a memory controller 1317.

The processor platform 1300 of the illustrated example also includes interface circuitry 1320. The interface circuitry 1320 may be implemented by hardware in accordance with any type of interface standard, such as an Ethernet interface, a universal serial bus (USB) interface, a Bluetooth^{®} interface, a near field communication (NFC) interface, a PCI interface, and/or a PCIe interface.

In the illustrated example, one or more input devices 1322 are connected to the interface circuitry 1320. The input device(s) 1322 permit(s) a user to enter data and/or commands into the processor circuitry 1312. The input device(s) 422 can be implemented by, for example, an audio sensor, a microphone, a camera (still or video), a keyboard, a button, a mouse, a touchscreen, a track-pad, a trackball, an isopoint device, and/or a voice recognition system.

One or more output devices 1324 are also connected to the interface circuitry 1320 of the illustrated example. The output devices 1324 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1320 of the illustrated example, thus, typically includes a graphics driver card, a graphics driver chip, and/or graphics processor circuitry such as a GPU.

The interface circuitry 1320 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1326. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 1300 of the illustrated example also includes one or more mass storage devices 1328 to store software and/or data. Examples of such mass storage devices 1328 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 1332, which may be implemented by the machine readable instructions of FIGS. 11 and 12, may be stored in the mass storage device 1328, in the volatile memory 1314, in the non-volatile memory 1316, and/or on a removable non-transitory computer readable storage medium such as a CD or DVD.

FIG. 15 is a block diagram of an example implementation of the processor circuitry 1312 of FIG. 13. In this example, the processor circuitry 1312 of FIG. 13 is implemented by a microprocessor 1400. For example, the microprocessor 1400 may implement multi-core hardware circuitry such as a CPU, a DSP, a GPU, an XPU, etc. Although it may include any number of example cores 1402 (e.g., 1 core), the microprocessor 1400 of this example is a multi-core semiconductor device including N cores. The cores 1402 of the microprocessor 1400 may operate independently or may cooperate to execute machine readable instructions. For example, machine code corresponding to a firmware program, an embedded software program, or a software program may be executed by one of the cores 1402 or may be executed by multiple ones of the cores 1402 at the same or different times. In some examples, the machine code corresponding to the firmware program, the embedded software program, or the software program is split into threads and executed in parallel by two or more of the cores 1402. The software program may correspond to a portion or all of the machine readable instructions and/or operations represented by the flowcharts of FIGS. 11 and 12.

The cores 1402 may communicate by an example bus 1404. In some examples, the bus 1404 may implement a communication bus to effectuate communication associated with one(s) of the cores 1402. For example, the bus 1404 may implement at least one of an inter-integrated Circuit (I2C) bus, a Serial Peripheral Interface (SPI) bus, a PCI bus, or a PCIe bus. Additionally or alternatively, the bus 1404 may implement any other type of computing or electrical bus. The cores 1402 may obtain data, instructions, and/or signals from one or more external devices by example interface circuitry 1406. The cores 1402 may output data, instructions, and/or signals to the one or more external devices by the interface circuitry 1406. Although the cores 1402 of this example include example local memory 1420 (e.g., Level 1 (L1) cache that may be split into an L1 data cache and an L1 instruction cache), the microprocessor 1400 also includes example shared memory 1410 that may be shared by the cores (e.g., Level 2 (L2_ cache)) for high-speed access to data and/or instructions. Data and/or instructions may be transferred (e.g., shared) by writing to and/or reading from the shared memory 1410. The local memory 1420 of each of the cores 1402 and the shared memory 1410 may be part of a hierarchy of storage devices including multiple levels of cache memory and the main memory (e.g., the main memory 1314, 1316 of FIG. 13). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1402 may be referred to as a CPU, DSP, GPU, etc., or any other type of hardware circuitry. Each core 1402 includes control unit circuitry 1414, arithmetic and logic (AL) circuitry (sometimes referred to as an ALU) 1416, a plurality of registers 1418, the L1 cache 1420, and an example bus 1422. Other structures may be present. For example, each core 1402 may include vector unit circuitry, single instruction multiple data (SIMD) unit circuitry, load/store unit (LSU) circuitry, branch/jump unit circuitry, floating-point unit (FPU) circuitry, etc. The control unit circuitry 1414 includes semiconductor-based circuits structured to control (e.g., coordinate) data movement within the corresponding core 1402. The AL circuitry 1416 includes semiconductor-based circuits structured to perform one or more mathematic and/or logic operations on the data within the corresponding core 1402. The AL circuitry 1416 of some examples performs integer based operations. In other examples, the AL circuitry 1416 also performs floating point operations. In yet other examples, the AL circuitry 1416 may include first AL circuitry that performs integer based operations and second AL circuitry that performs floating point operations. In some examples, the AL circuitry 1416 may be referred to as an Arithmetic Logic Unit (ALU). The registers 1418 are semiconductor-based structures to store data and/or instructions such as results of one or more of the operations performed by the AL circuitry 1416 of the corresponding core 1402. For example, the registers 1418 may include vector register(s), SIMD register(s), general purpose register(s), flag register(s), segment register(s), machine specific register(s), instruction pointer register(s), control register(s), debug register(s), memory management register(s), machine check register(s), etc. The registers 1418 may be arranged in a bank as shown in FIG. 14. Alternatively, the registers 1418 may be organized in any other arrangement, format, or structure including distributed throughout the core 1402 to shorten access time. The bus 1422 may implement at least one of an I2C bus, a SPI bus, a PCI bus, or a PCIe bus

Each core 1402 and/or, more generally, the microprocessor 1400 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1400 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 15 is a block diagram of another example implementation of the processor circuitry 1312 of FIG. 13. In this example, the processor circuitry 1312 is implemented by FPGA circuitry 1500. The FPGA circuitry 1500 can be used, for example, to perform operations that could otherwise be performed by the example microprocessor 1400 of FIG. 14 executing corresponding machine readable instructions. However, once configured, the FPGA circuitry 1500 instantiates the machine readable instructions in hardware and, thus, can often execute the operations faster than they could be performed by a general purpose microprocessor executing the corresponding software.

More specifically, in contrast to the microprocessor 1400 of FIG. 14 described above (which is a general purpose device that may be programmed to execute some or all of the machine readable instructions represented by the flowchart of FIGS. 11 and 12 but whose interconnections and logic circuitry are fixed once fabricated), the FPGA circuitry 1500 of the example of FIG. 15 includes interconnections and logic circuitry that may be configured and/or interconnected in different ways after fabrication to instantiate, for example, some or all of the machine readable instructions represented by the flowcharts of FIGS. 11 and 12. In particular, the FPGA 1500 may be thought of as an array of logic gates, interconnections, and switches. The switches can be programmed to change how the logic gates are interconnected by the interconnections, effectively forming one or more dedicated logic circuits (unless and until the FPGA circuitry 1500 is reprogrammed). The configured logic circuits enable the logic gates to cooperate in different ways to perform different operations on data received by input circuitry. Those operations may correspond to some or all of the software represented by the flowcharts of FIGS. 11 and 12. As such, the FPGA circuitry 1500 may be structured to effectively instantiate some or all of the machine readable instructions of the flowcharts of FIGS. 11 and 12 as dedicated logic circuits to perform the operations corresponding to those software instructions in a dedicated manner analogous to an ASIC. Therefore, the FPGA circuitry 1500 may perform the operations corresponding to the some or all of the machine readable instructions of FIGS. 11 and 12 faster than the general purpose microprocessor can execute the same.

In the example of FIG. 15, the FPGA circuitry 1500 is structured to be programmed (and/or reprogrammed one or more times) by an end user by a hardware description language (HDL) such as Verilog. The FPGA circuitry 1500 of FIG. 15, includes example input/output (I/O) circuitry 1502 to obtain and/or output data to/from example configuration circuitry 1504 and/or external hardware (e.g., external hardware circuitry) 1506. For example, the configuration circuitry 1504 may implement interface circuitry that may obtain machine readable instructions to configure the FPGA circuitry 1500, or portion(s) thereof. In some such examples, the configuration circuitry 1504 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 1506 may implement the microprocessor 1400 of FIG. 14. The FPGA circuitry 1500 also includes an array of example logic gate circuitry 1508, a plurality of example configurable interconnections 1510, and example storage circuitry 1512. The logic gate circuitry 1508 and interconnections 1510 are configurable to instantiate one or more operations that may correspond to at least some of the machine readable instructions of FIGS. 11 and 12 and/or other desired operations. The logic gate circuitry1508 shown in FIG. 15 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1508 to enable configuration of the electrical structures and/or the logic gates to form circuits to perform desired operations. The logic gate circuitry 1508 may include other electrical structures such as look-up tables (LUTs), registers (e.g., flip-flops or latches), multiplexers, etc.

The interconnections 1510 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1508 to program desired logic circuits.

The storage circuitry 1512 of the illustrated example is structured to store result(s) of the one or more of the operations performed by corresponding logic gates. The storage circuitry 1512 may be implemented by registers or the like. In the illustrated example, the storage circuitry 1512 is distributed amongst the logic gate circuitry 1508 to facilitate access and increase execution speed.

The example FPGA circuitry 1500 of FIG. 15 also includes example Dedicated Operations Circuitry 1514. In this example, the Dedicated Operations Circuitry 1514 includes special purpose circuitry 1516 that may be invoked to implement commonly used functions to avoid the need to program those functions in the field. Examples of such special purpose circuitry 1516 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1500 may also include example general purpose programmable circuitry 1518 such as an example CPU 1520 and/or an example DSP 1522. Other general purpose programmable circuitry 1518 may additionally or alternatively be present such as a GPU, an XPU, etc., that can be programmed to perform other operations.

Although FIGS. 45 and 15 illustrate two example implementations of the processor circuitry 1312 of FIG. 13, many other approaches are contemplated. For example, as mentioned above, modern FPGA circuitry may include an on-board CPU, such as one or more of the example CPU 1520 of FIG. 15. Therefore, the processor circuitry 1312 of FIG. 13 may additionally be implemented by combining the example microprocessor 1400 of FIG. 14 and the example FPGA circuitry 1500 of FIG. 15. In some such hybrid examples, a first portion of the machine readable instructions represented by the flowcharts of FIGS. 11 and 12 may be executed by one or more of the cores 1402 of FIG. 14 and a second portion of the machine readable instructions represented by the flowcharts of FIGS. 11 and 12 may be executed by the FPGA circuitry 1500 of FIG. 15.

In some examples, the processor circuitry 1312 of FIG. 13 may be in one or more packages. For example, the processor circuitry 1400 of FIG. 14 and/or the FPGA circuitry 1500 of FIG.1 5 may be in one or more packages. In some examples, an XPU may be implemented by the processor circuitry 1312 of FIG. 13, which may be in one or more packages. For example, the XPU may include a CPU in one package, a DSP in another package, a GPU in yet another package, and an FPGA in still yet another package.

From the foregoing, it will be appreciated that example systems, methods, apparatus, and articles of manufacture have been disclosed that facilitate model validation, verification, and propagation in edge environments. The disclosed systems, methods, apparatus, and articles of manufacture improve the efficiency of using a computing device by allowing edge appliances to verify a model validated or attested to by other edge appliances. With the verification, the edge appliances can trust the model without expending further or redundant resources validating the model. Another advantage of the examples disclosed herein includes a seamlessly created autonomous trusted and scalable solution to train and propagate models in an edge environment including, for example, in automotive (vehicle to vehicle (V2V or vehicle to everything (V2X)) deployments. This disclosure allows architectures where multiple tenants and multiple organizations can work together to share models while they can validate on the attestation of the models themselves. Thus, the disclosed systems, methods, apparatus, and articles of manufacture are accordingly directed to one or more improvement(s) in the operation of a machine such as a computer or other electronic and/or mechanical device.

An example device to propagate a model in edge architecture disclosed herein includes Example 1. Example 1 is a device that includes an interface to access a model received via the edge architecture; at least one memory; instructions in the device; and one or more processors to execute the instructions to: determine a number of attestation responses based on a blockchain associated with the model; determine if the number satisfies a threshold number; initiate an execution of the model in response to verifying that the number satisfies the threshold number; and transmit the model to a plurality of edge appliances in response the number not satisfying the threshold number.

Example 2 includes the device of Example 1, wherein to implement the model, the one or more processors is to: obtain sensor data; execute the model with the sensor data to obtain a model output; and cause an action to be taken in response to the model output.

Example 3 includes the device of either of Examples 1 or 2, wherein the number is a first number and the plurality of edge appliances is a first plurality of edge appliances, and to determine if the model is verified, the one or more processors is to: determine a second number of attestations of a second plurality of edge appliances based on the blockchain associated with the model; determine if the second number satisfies the threshold number; and indicate the model is verified based on the second number satisfying the threshold.

Example 4 includes the device of any of Examples 1-3, wherein when the one or more processors transmit the model to the plurality of edge appliances, the one or more processors are to cause the plurality of edge appliances to evaluate respective validation credentials and run the model when the respective edge appliance is qualified to validate the model based on the validation credentials.

Example 5 includes the device of any of Examples 1-4, wherein the one or more processors are to supplement the blockchain associated with the model based with an attestation of the model based on the execution of the model.

Example 6 includes the device of any of Examples 1-5, wherein the model is a first model, and the one or more processors are to: receive a second model from a remote edge appliance; determine if the device is qualified to validate the second model based on validation credentials; initiate an execution of the second model when the device is qualified; and transmit, over the edge architecture, an attestation of the second model based on the execution of the second model.

Example 7 includes the device of any of Examples 1-6, wherein the validation credentials are based on the second model.

Example 8 includes the device of any of Examples 1-7, wherein the attestation includes one or more of a hash or a signature of the device included in a blockchain associated with the second model.

Example 9 includes the device of any of Examples 1-8, wherein one or more processors are to access sensor data gathered by the device and use the sensor data to initiate the execution of the second model, wherein the attestation includes one or more of a hash or a signature of the sensor data included in a blockchain associated with the second model.

Example 10 includes the device of any of Examples 1-9, wherein the plurality of edge appliances is a first plurality of edge appliances, and the one or more processors are to: evaluate respective distances between the device and respective ones of a second plurality of edge appliances, the first plurality of edge appliances being a subset of the second plurality of edge appliances; and select the first plurality of edge appliances for receipt of the model based on the respective distances.

Example 11 is a device to propagate a model in edge architecture, the device including: means for accessing a model received via the edge architecture; means for processing a model, the processing means to: determine a number of attestation responses based on a blockchain associated with the model; determine if the number satisfies a threshold number; initiate an execution of the model in response to verifying that the number satisfies the threshold number; and transmit the model to a plurality of edge appliances in response the number not satisfying the threshold number.

Example 12 includes the device of Example 11, wherein to implement the model, the processing means is to: obtain sensor data; execute the model with the sensor data to obtain a model output; and cause an action to be taken in response to the model output.

Example 13 includes the device of either of Examples 11 or 12, wherein the number is a first number and the plurality of edge appliances is a first plurality of edge appliances, and to determine if the model is verified, the processing means is to: determine a second number of attestations of a second plurality of edge appliances based on the blockchain associated with the model; determine if the second number satisfies the threshold number; and indicate that the model is verified based on the second number satisfying the threshold.

Example 14 includes the device of any of Examples 11-13, wherein when the processing means transmits the model to the plurality of edge appliances, the processing means is to cause the plurality of edge appliances to evaluate respective validation credentials and run the model when the respective edge appliance is qualified to validate the model based on the validation credentials.

Example 15 includes the device of any of Examples 11-14, wherein processing means is to supplement the blockchain associated with the model based with an attestation of the model based on the execution of the model.

Example 16 includes the device of any of Examples 11-15, wherein the model is a first model, and the processing means is to: receive a second model from a remote edge appliance; determine if the device is qualified to validate the second model based on validation credentials; initiate an execution of the second model when the device is qualified; and transmit, over the edge architecture, an attestation of the second model based on the execution of the second model.

Example 17 includes the device of any of Examples 11-16, wherein the validation credentials are based on the second model.

Example 18 includes the device of any of Examples 11-17, wherein the attestation includes one or more of a hash or a signature of the device included in a blockchain associated with the second model.

Example 19 includes the device of any of Examples 11-18, wherein the processing means is to access sensor data gathered by the device and use the sensor data to initiate the execution of the second model, wherein the attestation includes one or more of a hash or a signature of the sensor data included in a blockchain associated with the second model.

Example 20 includes the device of any of Examples 11-19, wherein the plurality of edge appliances is a first plurality of edge appliances, and the processing means is to: evaluate respective distances between the device and respective ones of a second plurality of edge appliances, the first plurality of edge appliances being a subset of the second plurality of edge appliances; and select the first plurality of edge appliances for receipt of the model based on the respective distances.

Example 21 includes at least one non-transitory computer readable medium comprising instruction that, when executed, cause one or more processors to at least: determine a number of attestation responses based on a blockchain associated with a model; determine if the number satisfies a threshold number; initiate an execution of the model in response to verifying that the number satisfies the threshold number; and transmit the model to a plurality of edge appliances in response the number not satisfying the threshold number.

Example 22 includes the at least one non-transitory computer readable medium of Example 21, wherein the instructions cause the one or more processors to: obtain sensor data; execute the model with the sensor data to obtain a model output; and cause an action to be taken in response to the model output.

Example 23 includes the at least one non-transitory computer readable medium of either of Example 21 or 22, wherein the number is a first number and the plurality of edge appliances is a first plurality of edge appliances, and to determine if the model is verified, the instructions cause the one or more processors to: determine a second number of attestations of a second plurality of edge appliances based on the blockchain associated with the model; determine if the second number satisfies the threshold number; and indicate the model is verified based on the second number satisfying the threshold.

Example 24 includes the at least one non-transitory computer readable medium of any of Examples 21-23, wherein the instructions cause the plurality of edge appliances to evaluate respective validation credentials and run the model when the respective edge appliance is qualified to validate the model based on the validation credentials.

Example 25 includes the at least one non-transitory computer readable medium of any of Examples 21-24, wherein the instructions cause the one or more processors to supplement the blockchain associated with the model based with an attestation of the model based on the execution of the model.

Example 26 includes the at least one non-transitory computer readable medium of any of Examples 21-25, wherein the model is a first model, and the instructions cause the one or more processors to: receive a second model from a remote edge appliance; determine if a device including the one or more processors is qualified to validate the second model based on validation credentials; initiate an execution of the second model when the device is qualified; and transmit, over edge architecture, an attestation of the second model based on the execution of the second model.

Example 27 includes the at least one non-transitory computer readable medium of any of Examples 21-26, wherein the validation credentials are based on the second model.

Example 28 includes the at least one non-transitory computer readable medium of any of Examples 21-27, wherein the attestation includes one or more of a hash or a signature of the device included in a blockchain associated with the second model.

Example 29 includes the at least one non-transitory computer readable medium of any of Examples 21-28, wherein instructions cause the one or more processors to access sensor data and use the sensor data to initiate the execution of the second model, wherein the attestation includes one or more of a hash or a signature of the sensor data included in a blockchain associated with the second model.

Example 30 includes the at least one non-transitory computer readable medium of any of Examples 21-29, wherein the plurality of edge appliances are a first plurality of edge appliances, and the instructions cause the one or more processors to: evaluate respective distances between a device including the one or more processors and respective ones of a second plurality of edge appliances, the first plurality of edge appliances being a subset of the second plurality of edge appliances; and select the first plurality of edge appliances for receipt of the model based on the respective distances.

Example 31 includes a method to propagate a model in edge architecture, the method including: determining, by executing instructions with a processor, a number of attestation responses based on a blockchain associated with the model; determining, by executing instructions with the processor, if the number satisfies a threshold number; initiating, by executing instructions with the processor, execution of the model in response to verifying that the number satisfies the threshold number; and transmitting, by executing instructions with the processor, the model to a plurality of edge appliances in response the number not satisfying the threshold number.

Example 32 includes the method of Example 31, further including: obtaining sensor data; executing the model with the sensor data to obtain a model output; and causing an action to be taken in response to the model output.

Example 33 includes the method of either of Examples 31 or 32, wherein the number is a first number and the plurality of edge appliances is a first plurality of edge appliances, and to determine if the model is verified, the method includes: determining a second number of attestations of a second plurality of edge appliances based on the blockchain associated with the model; determining if the second number satisfies the threshold number; and indicating the model is verified based on the second number satisfying the threshold.

Example 34 includes the method of any of Examples 31-33, further including causing the plurality of edge appliances to evaluate respective validation credentials and run the model when the respective edge appliance is qualified to validate the model based on the validation credentials.

Example 35 includes the method of any of Examples 31-34, further including supplementing the blockchain associated with the model based with an attestation of the model based on the execution of the model.

Example 36 includes the method of any of Examples 31-35, wherein the model is a first model, and the method includes: receiving a second model from a remote edge appliance; determining if a device including the processor is qualified to validate the second model based on validation credentials; initiating an execution of the second model when the device is qualified; and transmitting, over the edge architecture, an attestation of the second model based on the execution of the second model.

Example 37 includes the method of any of Examples 31-36, wherein the validation credentials are based on the second model.

Example 38 includes the method of any of Examples 31-37, wherein the attestation includes one or more of a hash or a signature of the device included in a blockchain associated with the second model.

Example 39 includes the method of any of Examples 31-38, further including accessing sensor data and using the sensor data to initiate the execution of the second model, wherein the attestation includes one or more of a hash or a signature of the sensor data included in a blockchain associated with the second model.

Example 40 includes the method of any of Examples 31-39, wherein the plurality of edge appliances is a first plurality of edge appliances, and the methods includes: evaluating respective distances between a device including the processor and respective ones of a second plurality of edge appliances, the first plurality of edge appliances being a subset of the second plurality of edge appliances; and selecting the first plurality of edge appliances for receipt of the model based on the respective distances.

As used herein, data is information in any form that may be ingested, processed, interpreted and/or otherwise manipulated by processor circuitry to produce a result. The produced result may itself be data.

As used herein, a threshold is expressed as data such as a numerical value represented in any form, that may be used by processor circuitry as a reference for a comparison operation.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real world imperfections. As used herein "substantially real time" refers to occurrence in a near instantaneous manner recognizing there may be real world delays for computing time, transmission, etc. Thus, unless otherwise specified, "substantially real time" refers to real time +/-1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

## Claims

1. A device (1000) to propagate a model in an edge architecture, the device comprising:
means for accessing a model received via the edge architecture;
means for processing the model, the processing means to:
determine a number of attestation responses from peer devices based on a blockchain associated with the model;
determine if the number satisfies a threshold number;
initiate an execution of the model in response to verifying that the number satisfies the threshold number; and
transmit the model to a plurality of edge appliances in response to the number not satisfying the threshold number.

2. The device of claim 1, wherein the number is a first number and the plurality of edge appliances is a first plurality of edge appliances, and wherein determining if the model is verified, the processing means is to:
determine a second number of attestation responses from a second plurality of edge appliances based on the blockchain associated with the model;
determine if the second number satisfies the threshold number; and
indicate that the model is verified based on the second number satisfying the threshold.

3. The device of any of claims 1 or 2, wherein when the processing means transmits the model to the plurality of edge appliances, the processing means is to cause the plurality of edge appliances to evaluate respective validation credentials and run the model when the respective edge appliance is qualified to validate the model based on the validation credentials.

4. The device of any of claims 1-3, wherein processing means is to supplement the blockchain associated with the model with an attestation of the model based on the execution of the model.

5. The device of any of claims 1-4, wherein the model is a first model, and the processing means is to:
receive a second model from a remote edge appliance;
determine if the device is qualified to validate the second model based on validation credentials;
initiate an execution of the second model when the device is qualified; and
transmit, over the edge architecture, an attestation of the second model based on the execution of the second model.

6. The device of claim 5, wherein the validation credentials are based on the second model.

7. The device of any of claims 5 or 6, wherein the attestation includes one or more of a hash or a signature of the device included in a blockchain associated with the second model.

8. The device of any of claims 5-7, wherein the processing means is to access sensor data gathered by the device and use the sensor data to initiate the execution of the second model, wherein the attestation includes one or more of a hash or a signature of the sensor data included in a blockchain associated with the second model.

9. A method to be carried out by a device (1000) to propagate a model in an edge architecture, the method comprising:
determining, by executing instructions with a processor of the device, a number of attestation responses from peer devices based on a blockchain associated with the model;
determining, by executing instructions with the processor, if the number satisfies a threshold number;
initiating, by executing instructions with the processor, execution of the model in response to verifying that the number satisfies the threshold number; and
transmitting, by executing instructions with the processor, the model to a plurality of edge appliances in response to the number not satisfying the threshold number.

10. The method of claim 9, further including:
obtaining sensor data;
executing the model with the sensor data to obtain a model output; and
causing an action to be taken in response to the model output.

11. The method of any of claims 9 or 10, wherein the number is a first number and the plurality of edge appliances is a first plurality of edge appliances, and wherein determining if the model is verified, the method includes:
determining a second number of attestations of a second plurality of edge appliances based on the blockchain associated with the model;
determining if the second number satisfies the threshold number; and
indicating the model is verified based on the second number satisfying the threshold.

12. The method of any of claims 9-11, further including causing the plurality of edge appliances to evaluate respective validation credentials and run the model when the respective edge appliance is qualified to validate the model based on the validation credentials.

13. The method of any of claims 9-12, wherein the model is a first model, and the method includes:
receiving a second model from a remote edge appliance;
determining if the device including the processor is qualified to validate the second model based on validation credentials;
initiating an execution of the second model when the device is qualified; and
transmitting, over the edge architecture, an attestation of the second model based on the execution of the second model.

14. The method of any of claims 9-13, wherein the plurality of edge appliances is a first plurality of edge appliances, and the methods includes:
evaluating respective distances between the device including the processor and respective ones of a second plurality of edge appliances, the first plurality of edge appliances being a subset of the second plurality of edge appliances; and
selecting the first plurality of edge appliances for receipt of the model based on the respective distances.

15. At least one computer readable medium comprising instructions that, when executed, cause one or more processors to at least: implement the processing means of any of claims 1-8 and/or perform the method of any of claims 9-14.

## Patentansprüche

1. Vorrichtung (1000) zum Ausbreiten eines Modells in einer Edge-Architektur, wobei die Vorrichtung Folgendes umfasst:
eine Einrichtung für den Zugriff auf ein über die Edge-Architektur empfangenes Modell;
eine Einrichtung zum Verarbeiten des Modells, wobei die Verarbeitungseinrichtung folgende Aufgabe hat:
Bestimmen einer Zahl von Attestationsantworten von Peer-Vorrichtungen basierend auf einer mit dem Modell verbundenen Blockchain;
Bestimmen, ob die Zahl eine Schwellenzahl erfüllt;
Initiieren einer Ausführung des Modells als Reaktion auf die Überprüfung, dass die Zahl die Schwellenzahl erfüllt; und
Übertragen des Modells an eine Vielzahl von Edge-Geräten als Reaktion auf die Zahl, die die Schwellenzahl nicht erfüllt.

2. Vorrichtung nach Anspruch 1, wobei die Zahl eine erste Zahl ist und die Vielzahl von Edge-Geräten eine erste Vielzahl von Edge-Geräten ist, und wobei beim Bestimmen, ob das Modell überprüft ist, die Verarbeitungseinrichtung folgende Aufgabe hat:
Bestimmen einer zweiten Anzahl von Attestationsantworten von einer zweiten Vielzahl von Edge-Geräten auf der Basis der mit dem Modell verbundenen Blockchain;
Bestimmen, ob die zweite Zahl die Schwellenzahl erfüllt; und
Angeben, dass das Modell auf der Basis der zweiten Zahl, die den Schwellenwert erfüllt, überprüft wird.

3. Vorrichtung nach einem der Ansprüche 1 oder 2, wobei die Verarbeitungseinrichtung, wenn sie das Modell an die Vielzahl von Edge-Geräten überträgt, die Vielzahl von Edge-Geräten veranlassen soll, entsprechende Validierungsnachweise auszuwerten und das Modell auszuführen, wenn das jeweilige Edge-Gerät qualifiziert ist, das Modell basierend auf den Validierungsnachweisen zu validieren.

4. Vorrichtung nach einem der Ansprüche 1 bis 3, wobei die Verarbeitungseinrichtung dazu dient, die mit dem Modell verbundene Blockchain mit einer auf der Basis der Ausführung des Modells basierenden Attestation des Modells zu ergänzen.

5. Vorrichtung nach einem der Ansprüche 1 bis 4, wobei das Modell ein erstes Modell ist und die Verarbeitungseinrichtung folgende Aufgabe hat:
Empfangen eines zweiten Modells von einem entfernten Edge-Gerät;
Bestimmen, ob die Vorrichtung auf der Basis von Validierungsnachweisen für die Validierung des zweiten Modells geeignet ist;
Initiieren einer Ausführung des zweiten Modells, wenn die Vorrichtung qualifiziert ist; und
Übertragen, über die Edge-Architektur, einer Attestation des zweiten Modells, basierend auf der Ausführung des zweiten Modells.

6. Vorrichtung nach Anspruch 5, wobei die Validierungsnachweise auf dem zweiten Modell basieren.

7. Vorrichtung nach einem der Ansprüche 5 oder 6, wobei die Attestation einen oder mehrere Hashes oder eine Signatur der Vorrichtung beinhaltet, die in einer mit dem zweiten Modell verbundenen Blockchain enthalten ist.

8. Vorrichtung nach einem der Ansprüche 5-7, wobei die Verarbeitungseinrichtung auf von der Vorrichtung erfasste Sensordaten zugreift und die Sensordaten verwendet, um die Ausführung des zweiten Modells zu initiieren, wobei die Attestation einen oder mehrere Hashes oder eine Signatur der Sensordaten beinhaltet, die in einer mit dem zweiten Modell verbundenen Blockchain enthalten sind.

9. Von einer Vorrichtung (1000) auszuführendes Verfahren zum Ausbreiten eines Modells in einer Edge-Architektur, wobei das Verfahren Folgendes umfasst:
Bestimmen, durch Ausführen von Anweisungen mit einem Prozessor der Vorrichtung, einer Zahl von Attestationsantworten von Peer-Vorrichtungen basierend auf einer mit dem Modell verbundenen Blockchain;
Bestimmen, durch Ausführen von Anweisungen mit dem Prozessor, ob die Zahl eine Schwellenzahl erfüllt;
Initiieren, durch Ausführen von Anweisungen mit dem Prozessor, der Ausführung des Modells als Reaktion auf das Überprüfen, dass die Zahl die Schwellenzahl erfüllt; und
Übertragen, durch Ausführen von Anweisungen mit dem Prozessor, des Modells an eine Vielzahl von Randgeräten als Reaktion auf die Zahl, die die Schwellenzahl nicht erfüllt.

10. Verfahren nach Anspruch 9, das ferner Folgendes beinhaltet:
Erhalten von Sensordaten;
Ausführen des Modells mit den Sensordaten, um eine Modellausgabe zu erhalten; und
Veranlassen einer Aktion als Reaktion auf das ausgegebene Modell.

11. Verfahren nach einem der Ansprüche 9 oder 10, wobei die Zahl eine erste Zahl ist und die Vielzahl von Edge-Geräten eine erste Vielzahl von Edge-Geräten ist, und wobei das Verfahren beim Bestimmen, ob das Modell überprüft ist, Folgendes beinhaltet:
Bestimmen einer zweiten Zahl von Attestationen einer zweiten Vielzahl von Edge-Geräten auf der Basis der mit dem Modell verbundenen Blockchain;
Bestimmen, ob die zweite Zahl die Schwellenzahl erfüllt; und
Angeben, dass das Modell auf der Basis der zweiten Zahl, die den Schwellenwert erfüllt, überprüft wird.

12. Verfahren nach einem der Ansprüche 9 bis 11, ferner beinhaltend das Veranlassen der Vielzahl von Edge-Geräten, die jeweiligen Validierungsnachweise auszuwerten und das Modell auszuführen, wenn das jeweilige Edge-Gerät qualifiziert ist, das Modell basierend auf den Validierungsnachweisen zu validieren.

13. Verfahren nach einem der Ansprüche 9-12, wobei das Modell ein erstes Modell ist und das Verfahren Folgendes beinhaltet:
Empfangen eines zweiten Modells von einem entfernten Edge-Gerät;
Bestimmen, ob die Vorrichtung mit dem Prozessor qualifiziert ist, das zweite Modell auf der Basis von Validierungsnachweisen zu validieren;
Initiieren der Ausführung des zweiten Modells, wenn die Vorrichtung qualifiziert ist; und
Übertragen, über die Edge-Architektur, einer Attestation des zweiten Modells, basierend auf der Ausführung des zweiten Modells.

14. Verfahren nach einem der Ansprüche 9-13, wobei die Vielzahl von Edge-Geräten eine erste Vielzahl von Edge-Geräten ist und das Verfahren Folgendes beinhaltet:
Auswerten der jeweiligen Abstände zwischen der Vorrichtung mit dem Prozessor und den jeweiligen Edge-Geräten aus einer zweiten Vielzahl von Edge-Geräten, wobei die erste Vielzahl von Edge-Geräten ein Teilsatz der zweiten Vielzahl von Edge-Geräten ist; und
Auswählen der ersten Vielzahl von Edge-Geräten für den Empfang des Modells basierend auf den jeweiligen Abständen.

15. Mindestens ein computerlesbares Medium, das Anweisungen umfasst, die, wenn sie ausgeführt werden, einen oder mehrere Prozessoren veranlassen, mindestens Folgendes zu bewirken: Implementieren der Verarbeitungseinrichtung nach einem der Ansprüche 1-8 und/oder Durchführen des Verfahrens nach einem der Ansprüche 9-14.

## Revendications

1. Dispositif (1000) de propagation d'un modèle dans une architecture de périphérie, le dispositif comportant :
un moyen servant à accéder à un modèle reçu par l'intermédiaire de l'architecture de périphérie ;
un moyen servant à traiter le modèle, le moyen de traitement devant :
déterminer un nombre de réponses d'attestation provenant de dispositifs homologues sur la base d'une chaîne de blocs associée au modèle ;
déterminer si le nombre satisfait un nombre seuil ;
amorcer une exécution du modèle en réponse à la vérification du fait que le nombre satisfasse le nombre seuil ; et
transmettre le modèle à une pluralité d'appareils de périphérie en réponse au fait que le nombre ne satisfasse pas le nombre seuil.

2. Dispositif selon la revendication 1, le nombre étant un premier nombre et la pluralité d'appareils de périphérie étant une première pluralité d'appareils de périphérie, et pour déterminer si le modèle est vérifié, le moyen de traitement devant :
déterminer un second nombre de réponses d'attestation provenant d'une seconde pluralité d'appareils de périphérie sur la base de la chaîne de blocs associée au modèle ;
déterminer si le second nombre satisfait le nombre seuil ; et
indiquer que le modèle est vérifié sur la base du fait que le second nombre satisfasse le seuil.

3. Dispositif selon l'une quelconque des revendications 1 ou 2, lorsque le moyen de traitement transmet le modèle à la pluralité d'appareils de périphérie, le moyen de traitement devant amener la pluralité d'appareils de périphérie à évaluer des justificatifs respectifs de validation et à exécuter le modèle lorsque l'appareil de périphérie considéré est qualifié pour valider le modèle sur la base des justificatifs de validation.

4. Dispositif selon l'une quelconque des revendications 1 à 3, le moyen de traitement devant compléter la chaîne de blocs associée au modèle avec une attestation du modèle sur la base de l'exécution du modèle.

5. Dispositif selon l'une quelconque des revendications 1 à 4, le modèle étant un premier modèle, et le moyen de traitement devant :
recevoir un second modèle en provenance d'un appareil de périphérie distant ;
déterminer si le dispositif est qualifié pour valider le second modèle sur la base de justificatifs de validation ;
amorcer une exécution du second modèle lorsque le dispositif est qualifié ; et
émettre, sur l'architecture de périphérie, une attestation du second modèle sur la base de l'exécution du second modèle.

6. Dispositif selon la revendication 5, les justificatifs de validation étant basés sur le second modèle.

7. Dispositif selon l'une quelconque des revendications 5 ou 6, l'attestation comprenant un ou plusieurs éléments parmi un hachage ou une signature du dispositif inclus dans une chaîne de blocs associée au second modèle.

8. Dispositif selon l'une quelconque des revendications 5 à 7, le moyen de traitement devant accéder à des données de capteur collectées par le dispositif et à utiliser les données de capteur pour amorcer l'exécution du second modèle, l'attestation comprenant un ou plusieurs éléments parmi un hachage ou une signature des données de capteur inclus dans une chaîne de blocs associée au second modèle.

9. Procédé à réaliser par un dispositif (1000) pour propager un modèle dans une architecture de périphérie, le procédé comportant les étapes consistant à :
déterminer, en exécutant des instructions à l'aide d'un processeur du dispositif, un nombre de réponses d'attestation provenant de dispositifs homologues sur la base d'une chaîne de blocs associée au modèle ;
déterminer, en exécutant des instructions à l'aide du processeur, si le nombre satisfait un nombre seuil ;
amorcer, en exécutant des instructions à l'aide du processeur, l'exécution du modèle en réponse à la vérification du fait que le nombre satisfasse le nombre seuil ; et
transmettre, en exécutant des instructions à l'aide du processeur, le modèle à une pluralité d'appareils de périphérie en réponse au fait que le nombre ne satisfasse pas le nombre seuil.

10. Procédé selon la revendication 9, comprenant en outre les étapes consistant à :
obtenir des données de capteur ;
exécuter le modèle avec les données de capteur pour obtenir une sortie de modèle ; et
faire en sorte qu'une action soit effectuée en réponse à la sortie de modèle.

11. Procédé selon l'une quelconque des revendications 9 ou 10, le nombre étant un premier nombre et la pluralité d'appareils de périphérie étant une première pluralité d'appareils de périphérie, et pour déterminer si le modèle est vérifié, le procédé comprenant les étapes consistant à :
déterminer un second nombre d'attestations d'une seconde pluralité d'appareils de périphérie sur la base de la chaîne de blocs associée au modèle ;
déterminer si le second nombre satisfait le nombre seuil ; et
indiquer que le modèle est vérifié sur la base du fait que le second nombre satisfasse le seuil.

12. Procédé selon l'une quelconque des revendications 9 à 11, comprenant en outre l'étape consistant à amener la pluralité d'appareils de périphérie à évaluer des justificatifs respectifs de validation et à exécuter le modèle lorsque l'appareil de périphérie considéré est qualifié pour valider le modèle sur la base des justificatifs de validation.

13. Procédé selon l'une quelconque des revendications 9 à 12, le modèle étant un premier modèle, et le procédé comprenant les étapes consistant à :
recevoir un second modèle en provenance d'un appareil de périphérie distant ;
déterminer si le dispositif incluant le processeur est qualifié pour valider le second modèle sur la base de justificatifs de validation ;
amorcer une exécution du second modèle lorsque le dispositif est qualifié ; et
émettre, sur l'architecture de périphérie, une attestation du second modèle sur la base de l'exécution du second modèle.

14. Procédé selon l'une quelconque des revendications 9 à 13, la pluralité d'appareils de périphérie étant une première pluralité d'appareils de périphérie, et le procédé comprenant les étapes consistant à :
évaluer des distances respectives entre le dispositif incluant le processeur et des appareils respectifs d'une seconde pluralité d'appareils de périphérie, la première pluralité d'appareils de périphérie étant un sous-ensemble de la seconde pluralité d'appareils de périphérie ; et
sélectionner la première pluralité d'appareils de périphérie pour la réception du modèle sur la base des distances respectives.

15. Au moins un support lisible par ordinateur comportant des instructions qui, lorsqu'elles sont exécutées, amènent un ou plusieurs processeurs à au moins: mettre en œuvre le moyen de traitement selon l'une quelconque des revendications 1 à 8 et/ou réaliser le procédé selon l'une quelconque des revendications 9 à 14.
